# EUROPEAN PATENT APPLICATION

(11) **EP 4 851 989 A1**
(43) Date of publication of application: **09.12.2026**
(21) Application number: 26704297.6
(22) Date of filing: 10.02.2026
(51) Int. Cl.: G10L 15/16, G10L 15/26, G10L 25/51, G10L 17/02, G06F 3/16, G06F 16/63, G10L 25/30, G10L 15/22

(54) **ELECTRONIC DEVICE AND CONTROL METHOD THEREFOR**

(30) Priority: 17.03.2025 KR 20250034174
(71) Applicant: Samsung Electronics Co., Ltd, Suwon-si, Gyeonggi-do 16677 (KR)
(72) Inventor: KIM, Yongnam, Suwon-si, Gyeonggi-do 16677 (KR); CHA, Seungwon, Suwon-si, Gyeonggi-do 16677 (KR); LEE, Taewoo, Suwon-si, Gyeonggi-do 16677 (KR); LEE, Kanghee, Suwon-si, Gyeonggi-do 16677 (KR); YUN, Chaeyoung, Suwon-si, Gyeonggi-do 16677 (KR); YOON, Sukun, Suwon-si, Gyeonggi-do 16677 (KR); KIM, Jihoon, Suwon-si, Gyeonggi-do 16677 (KR)
(74) Representative: Appleyard Lees IP LLP
(86) International application number: PCT/KR2026/002490
(87) International publication number: WO 2026/197602

(57) **Abstract**

An electronic apparatus (100) according to an embodiment of the disclosure includes memory (110) storing instructions, at least one sensor (120) for sensing a space, and at least one processor (130) including processing circuitry, and the instructions, when executed individually or collectively by the at least one processor, cause the electronic apparatus to obtain, based on data obtained from a space where a user voice input is received through the at least one sensor, similar history information corresponding to the user voice input from among history information, and obtain content corresponding to the user voice input by inputting a prompt obtained based on the similar history information into an artificial intelligence model, and the artificial intelligence model is an artificial intelligence model based on previous user voice input and the history information.

## Description

### [Technical Field]

The disclosure relates to an electronic apparatus and a controlling method thereof, and more particularly to an electronic apparatus that obtains content using dialogue content of a user and visual information and a controlling method thereof.

### [Background Art]

With developments in electronic technology, use of electronic products capable of generating suitable content or providing the same to users located near devices are increasing.

Specifically, electronic products capable of generating dialogue sentences suitable to a dialogue topic by analyzing dialogue of users and providing dialogue sentences in a manner of dialoguing with users are being developed recently. The related art is limited to technology that is capable of recognizing simple voice commands, and there are limitations in providing suitable customized content that reflects context of user dialogue. In addition, if there are several users present, a customized function for each user cannot be provided.

### [Disclosure]

### [Technical Solution]

According to an embodiment of the disclosure, there is provided an electronic apparatus comprising: memory storing instructions; at least one sensor for sensing a space; and at least one processor comprising processing circuitry. The instructions, when executed individually or collectively by the at least one processor, may cause the electronic apparatus to: obtain, based on data obtained from a space where a user voice input is received through the at least one sensor, similar history information corresponding to the user voice input from among history information, and obtain content corresponding to the user voice by inputting a prompt obtained based on the similar history information into an artificial intelligence model, wherein the artificial intelligence model is an artificial intelligence model based on previous user voice input and the history information.

The instructions, when executed individually or collectively by the at least one processor, may cause the electronic apparatus to: identify, based on the obtained data, at least one group corresponding to the user voice input from among a plurality of groups in the history information, and obtain information belonging to the at least one group as the similar history information. Each of the plurality of groups may contain information relating to a history of one or more specific speakers having used the electronic apparatus at one or more specific locations.

The sensors may comprise: a microphone and an image sensor. The instructions, when executed individually or collectively by the at least one processor, may cause the electronic apparatus to: identify the at least one group based on voice data corresponding to the user voice input obtained through the microphone matching the one or more specific speakers, and/or image data of the space obtained through the image sensor matching the one or more specific locations.

Each of the plurality of groups may comprise at least one voice record from among the one or more specific speakers. The instructions, when executed individually or collectively by the at least one processor, may cause the electronic apparatus to: identify at least one group comprising voice records corresponding to the voice data from among the plurality of groups.

The plurality of groups may comprise: at least one dialogue group comprising voice records of a plurality of dialogue participants from among the specific speakers. The instructions, when executed individually or collectively by the at least one processor, may cause the electronic apparatus to: identify, based on a plurality of users being identified as positioned in the space based on at least one from among the voice data and the image data, the at least one group comprising voice records corresponding to the voice data from among the at least one dialogue group.

The instructions, when executed individually or collectively by the at least one processor, may cause the electronic apparatus to: identify a location corresponding to the space based on the image data of the space, and identify the at least one group corresponding to the identified location from among the plurality of groups.

The at least one group may further comprise records corresponding to control of at least one external device from the identified location.

The instructions, when executed individually or collectively by the at least one processor, may cause the electronic apparatus to: obtain a portion of information corresponding to a current time from among information belonging to the at least one group as the similar history information.

The instructions, when executed individually or collectively by the at least one processor, may cause the electronic apparatus to: obtain the prompt based on a text converted from the user voice input and the similar history information.

The electronic apparatus may further comprise: a moving part configured to move the electronic apparatus. The instructions, when executed individually or collectively by the at least one processor, may cause the electronic apparatus to: obtain a voice input position corresponding to a position where a user voice corresponding to the user voice input is identified as having been uttered, and control the moving part to move the electronic apparatus to a position that is a pre-set distance from the voice input position.

According to another embodiment of the disclosure, there is provided a controlling method of an electronic apparatus, the method comprising: obtaining, based on data obtained from a space where a user voice input is received, similar history information corresponding to the user voice input from among history information; and obtaining content corresponding to the user voice input by inputting a prompt obtained based on the similar history information into an artificial intelligence model, wherein the artificial intelligence model is an artificial intelligence model based on previous user voice input and the history information.

The obtaining similar history information may comprise: identifying, based on the obtained data, at least one group corresponding to the user voice input from among a plurality of groups in the history information; and obtaining information belonging to the at least one group as the similar history information, wherein each of the plurality of groups contains information relating to a history of one or more specific speakers having used the electronic apparatus at one or more specific locations.

The identifying at least one group may comprise: identifying the at least one group based on voice data corresponding to the user voice input matching the one or more specific speakers, and/or image data of the space matching the one or more specific locations.

Each of the plurality of groups may comprise at least one voice record from among the one or more specific speakers. The identifying at least one group corresponding to the user voice input from among the plurality of identified groups based on at least one from among a plurality of speakers and a plurality of locations may comprise: identifying at least one group comprising voice records corresponding to the voice data from among the plurality of groups.

According to another embodiment of the disclosure, there is provided a computer-readable medium comprising instructions which, when executed by a processor of an electronic apparatus, cause the electronic apparatus to: obtain, based on data obtained from a space where a user voice input is received, similar history information corresponding to the user voice input from among history information; and obtain content corresponding to a user voice input by inputting a prompt obtained based on the similar history information into an artificial intelligence model, wherein the artificial intelligence model is an artificial intelligence model based on previous user voice input and the history information.

According to an alternative embodiment of the disclosure, an electronic apparatus includes memory storing instructions, at least one sensor for sensing a space, and at least one processor including processing circuitry, and the instructions, when executed individually or collectively by the at least one processor, cause the electronic apparatus to obtain, based on data obtained from a space corresponding to a user voice input from among the space through the at least one sensor, similar history information corresponding to the user voice input from among history information, and obtain content corresponding to the user voice input through an artificial intelligence model using a prompt obtained based on the similar history information, and the artificial intelligence model is an artificial intelligence model associated with content output corresponding to a previous user voice input based on the previous user voice input and the history information.

The instructions, when executed individually or collectively by the at least one processor, may cause the electronic apparatus to identify at least one group corresponding to the user voice input from among a plurality of groups included in the history information based on the data, and obtain information belonging to the at least one group from among the history information as the similar history information.

The at least one sensor may include a microphone and an image sensor, and the instructions, when executed individually or collectively by the at least one processor, may cause the electronic apparatus to identify, based on at least one from among voice data corresponding to the user voice input obtained through the microphone and image data of a space corresponding to the user voice input obtained through the image sensor, at least one group corresponding to the user voice input from among the plurality of identified groups based on at least one from among a plurality of speakers and a plurality of locations.

Each of the plurality of groups may include at least one voice record from among the plurality of speakers, and the instructions, when executed individually or collectively by the at least one processor, may cause the electronic apparatus to identify at least one group including voice records corresponding to the voice data from among the plurality of groups.

The plurality of groups may include at least one dialogue group including voice records of a plurality of dialogue participants from among the plurality of speakers, and the instructions, when executed individually or collectively by the at least one processor, may cause the electronic apparatus to identify, based on a plurality of users being identified as positioned in a space corresponding to the user voice input based on at least one from among the voice data and the image data, at least one group including voice records corresponding to the voice data from among the at least one dialogue group.

The instructions, when executed individually or collectively by the at least one processor, may cause the electronic apparatus to identify a location corresponding to a space corresponding to the user voice input from among the plurality of locations based on image data of a space corresponding to the user voice input, and identify at least one group corresponding to the identified location from among the plurality of groups.

The instructions, when executed individually or collectively by the at least one processor, may cause the electronic apparatus to identify the at least one group including records corresponding to control of at least one external device from the identified location.

The instructions, when executed individually or collectively by the at least one processor, may cause the electronic apparatus to obtain a portion of information corresponding to a current time from among information belonging to the at least one group as the similar history information.

The instructions, when executed individually or collectively by the at least one processor, may cause the electronic apparatus to obtain a prompt including a text converted from the user voice input and the similar history information.

The electronic apparatus may further include a moving part corresponding to movement by the electronic apparatus, and the instructions, when executed individually or collectively by the at least one processor, may cause the electronic apparatus to obtain a voice input position corresponding to the user voice input based on initial data obtain from the space based on the user voice input being received, and control the moving part and the at least one sensor to sense a space corresponding to the user voice input by moving from the obtained position to a position of a pre-set distance.

According to an embodiment of the disclosure, a controlling method of an electronic apparatus includes obtaining, based on data obtained from a space corresponding to a user voice input, similar history information corresponding to the user voice input from among history information, and obtaining content corresponding to the user voice input through an artificial intelligence model using a prompt obtained based on the similar history information, and the artificial intelligence model is an artificial intelligence model associated with content output corresponding to a previous user voice input based on the previous user voice input and the history information.

The obtaining similar history information may include identifying at least one group corresponding to the user voice input from among a plurality of groups included in the history information based on the data, and obtaining information belonging to the at least one group from among the history information as the similar history information.

The identifying at least one group may include identifying, based on at least one from among voice data corresponding to the user voice input and image data of a space corresponding to the user voice input, at least one group corresponding to the user voice input from among the plurality of identified groups based on at least one from among a plurality of speakers and a plurality of locations.

Each of the plurality of groups may include at least one voice record from among the plurality of speakers, and the identifying at least one group corresponding to the user voice input from among the plurality of identified groups based on at least one from among a plurality of speakers and a plurality of locations may include identifying at least one group including voice records corresponding to the voice data from among the plurality of groups.

The plurality of groups may include at least one dialogue group including voice records of a plurality of dialogue participants from among the plurality of speakers, and the identifying at least one group including voice records corresponding to the voice data from among the plurality of groups may include identifying, based on a plurality of users being identified as positioned in a space corresponding to the user voice input based on at least one from among the voice data and the image data, at least one group including voice records corresponding to the voice data from among the at least one dialogue group.

The identifying at least one group corresponding to the user voice input from among the plurality of identified groups based on at least one from among a plurality of speakers and a plurality of locations may include identifying a location corresponding to a space corresponding to the user voice input from among the plurality of locations based on image data of a space corresponding to the user voice input, and identifying at least one group corresponding to the identified location from among the plurality of groups.

The identifying at least one group corresponding to the identified location from among the plurality of groups may include identifying the at least one group including records corresponding to control of at least one external device from the identified location.

The obtaining information belonging to the at least one group from among the history information as the similar history information may include obtaining a portion of information corresponding to a current time from among information belonging to the at least one group as the similar history information.

The obtaining content using the obtained prompt may include obtaining a prompt including a text converted from the user voice input and the similar history information.

According to an embodiment of the disclosure, a non-transitory computer-readable recording medium stores computer instructions for an electronic apparatus to perform an operation when executed by a processor of the electronic apparatus, the operation includes obtaining, based on data obtained from a space corresponding to a user voice input, similar history information corresponding to the user voice input from among history information, and obtaining content corresponding to the user voice input through an artificial intelligence model using a prompt obtained based on the similar history information, and the artificial intelligence model is an artificial intelligence model associated with content output corresponding to a previous user voice input based on the previous user voice input and the history information.

### [Description of Drawings]

The subject-matter of the present disclosure is best understood with reference to the accompanying figures, in which:
FIG. 1 is a diagram illustrating an operation of an electronic apparatus according to one or more embodiments of the disclosure;
FIG. 2 is a block diagram illustrating a configuration of an electronic apparatus according to one or more embodiments of the disclosure;
FIG. 3 is a detailed block diagram illustrating a detailed configuration of an electronic apparatus according to one or more embodiments of the disclosure;
FIG. 4 is a diagram illustrating an operation of an electronic apparatus according to one or more embodiments of the disclosure;
FIG. 5 is a diagram illustrating an electronic apparatus and an external electronic device according to one or more embodiments of the disclosure;
FIG. 6 is a flowchart illustrating a controlling method of an electronic apparatus according to one or more embodiments of the disclosure;
FIG. 7 is a diagram illustrating a controlling method of an electronic apparatus according to one or more embodiments of the disclosure;
FIG. 8 is a diagram illustrating a device control history according to one or more embodiments of the disclosure;
FIG. 9 is a diagram illustrating a user response according to one or more embodiments of the disclosure; and
FIG. 10 is a diagram illustrating a device control operation according to one or more embodiments of the disclosure.

### [Mode for Invention]

Various modifications may be made to the embodiments of the disclosure, and there may be various types of embodiments. Accordingly, specific embodiments will be illustrated in drawings, and described in detail in the detailed description. However, it should be noted that the various embodiments are not for limiting the scope of the disclosure to a specific embodiment. With respect to the description of the drawings, like reference numerals may be used to indicate like elements.

In describing the disclosure, in case it is determined that the detailed description of related known technologies or configurations may unnecessarily confuse the gist of the disclosure, the detailed description thereof will be omitted. A singular expression includes a plural expression, unless otherwise specified.

In the disclosure, expressions such as "have", "may have", "include", and "may include" are used to designate a presence of a corresponding characteristic (e.g., elements such as numerical value, function, operation, or component), and not to preclude a presence or a possibility of additional characteristics.

In the disclosure, expressions such as "A or B", "at least one of A and/or B", or "one or more of A and/or B" may include all possible combinations of the items listed together. For example, "A or B", "at least one of A and B", or "at least one of A or B" may refer to all cases including (1) at least one A, (2) at least one B, or (3) both of at least one A and at least one B.

Expressions such as "1st", "2nd", "first", or "second" used in the disclosure may limit various elements regardless of order and/or importance, and may be used merely to distinguish one element from another element and not to limit the relevant element.

When a certain element (e.g., first element) is indicated as being "(operatively or communicatively) coupled with/to" or "connected to" another element (e.g., second element), it may be understood as the certain element being directly coupled with/to the another element or as being coupled through other element (e.g., third element).

Conversely, when the certain element (e.g., first element) is indicated as "directly coupled with/to" or "directly connected to" another element (e.g., second element), it may be understood as an additional element (e.g., a third element) not being present between the certain element and the another element.

The expression "configured to... (or set up to)" used in the disclosure may be used interchangeably with, for example, "suitable for...", "having the capacity to...", "designed to...", "adapted to...", "made to...", or "capable of..." based on circumstance. The term "configured to... (or set up to)" may not necessarily mean "specifically designed to" in terms of hardware.

Rather, in a certain circumstance, the expression "a device configured to..." may mean something that the device "may perform..." together with another device or components. For example, a phrase "a sub-processor configured to (or set up to) perform A, B, or C" may mean a dedicated processor for performing a relevant operation (e.g., embedded processor), or a generic-purpose processor (e.g., central processing unit (CPU) or application processor) capable of performing the relevant operations by executing one or more software programs stored in a memory device.

The term 'module' or 'part' used in one or more embodiments herein perform at least one function or operation, and may be implemented with hardware or software, or implemented with a combination of hardware and software. In addition, a plurality of 'modules' or a plurality of 'parts', except for a 'module' or a 'part' which needs to be implemented with a specific hardware, may be integrated in at least one module and implemented as at least one processor.

Meanwhile, the various elements and areas of the drawings have been schematically illustrated. Accordingly, the disclosure is not limited by relative sizes and distances illustrated in the accompanied drawings.

Embodiments of the disclosure will be described in detail below with reference to the accompanying drawings to aid in the understanding of those of ordinary skill in the art.

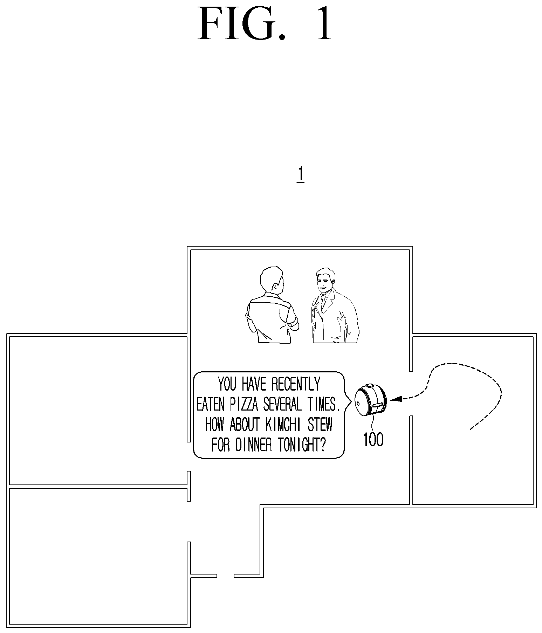

FIG. 1 is a diagram schematically illustrating an operation of an electronic apparatus according to one or more embodiments of the disclosure.

Referring to FIG. 1, an electronic apparatus 100 positioned within a home 1 is shown.

The electronic device 100 may be implemented as at least one from among, for example, and without limitation, a smartphone, a tablet personal computer (PC), a desktop PC, a laptop PC, a PC, a set top box, an over-the-top (OTT) media service server, a video game console, a Blu Ray Player, a Digital Video Disc or Digital Versatile Disc (DVD) player, a home automation control panel, a security control panel, a media box (e.g., Samsung HomeSyncTM, Apple TVTM, or Google TVTM), a game console (e.g., XboxTM, PlayStationTM), or the like. However, the embodiment is not limited thereto.

For example, the electronic apparatus 100 may correspond to a projector capable of projecting an image. Here, the projector may mean a device capable of projecting an image to a wall or a screen. The electronic apparatus 100 may project an image from a suitable position while moving within the home 1.

Here, within the home 1 may mean a space that includes a path through which the electronic apparatus 100 can move and includes a wall for projecting an image or other objects. For example, the home 1 may be a space inside a house, an office, a storage, and the like.

Meanwhile, the electronic apparatus 100 may move to a space in which/where users are present within the home 1. Here, the users may mean people positioned within the home 1. For example, if within the home 1 is a space inside of a house, the people may correspond to family members.

The electronic apparatus 100 may move to a space where users are present by detecting dialoguing voices of users. For example, if the electronic apparatus 100 detects the dialoguing voices while positioned at a right room among the spaces within the home 1, the dialoguing voices may be identified as having been generated from a room positioned at the middle.

In this case, the electronic apparatus 100 may move to the middle room and move near to the users dialoguing. Here, the electronic apparatus 100 may move toward place where the users are positioned by continuously tracking the dialoguing voices. The electronic apparatus 100 may then receive the dialoguing voices of the users from the position to which it has moved.

The electronic apparatus 100 may output content based on the dialoguing voices of the users. Specifically, the electronic apparatus 100 may output content including a specific sentence. Here, the specific sentence may correspond to a sentence for intervening in a dialogue of the users.

For example, the electronic apparatus 100 may identify a dialogue topic such as 'dinner menu' from the dialoguing voices of the users. In this case, the electronic apparatus 100 may generate a sentence such as "You have recently eaten pizza several times. How about kimchi stew (kimchi jjigae) for dinner tonight?" based on the dialoguing voices of the users and other data.

Here, the other data may include previous history information of the electronic apparatus 100. The history information may include use history, utterance, and dialoguing voice records (or each speaker) of the electronic apparatus 100, control history of other devices, and the like in a form of a database. The database (DB) form may mean a method of having organized to a specific data structure such as a table, a graph, or a key-value structure so as to effectively store, search, and manage data.

For example, the history information may include information such as 'you have eaten pizza seven times for dinner in the past month'. The information may correspond to information obtained from voices collected by the electronic apparatus 100 from previous dialogues of the users. However, the embodiment is not limited thereto.

Meanwhile, the electronic apparatus 100 may identify a dialogue topic or generate a sentence using a large language model (LLM).

The LLM may correspond to a natural language processing (NLP) model which possesses a language understanding and generating capability similar with that of human language by learning text data of a vast amount. For example, the LLM may perform various natural language processing operations such as sentence prediction, document summarization, and translation.

For example, the LLM may correspond to a model trained to generate sentences based on the voices of users (user voice, uttered voice, dialoguing voice, etc.) and history information. The LLM may correspond to a model (internal LLM) stored inside the electronic apparatus 100, but is not limited thereto, and may correspond to a model (LLM) stored in an external device (e.g., server, etc.).

In this case, the electronic apparatus 100 may use at least one from among the internal LLM or the external LLM and perform an operation of generating sentences, or the like. At this time, the electronic apparatus 100 may determine the LLM to use based on the received dialoguing voices. For example, the electronic apparatus 100 may determine to use only the internal LLM based on the dialogue topic being identified as a topic associated with personal information based on the received dialoguing voices.

Meanwhile, the electronic apparatus 100 may output content that includes a generated sentence through an output device. Here, the output device may correspond to a speaker or a projection part. In this case, the electronic apparatus 100 may output the generated sentence in voice form through the speaker, or output the generated sentence through the projection part in image form that is visually recognizable. Here, detailed descriptions associated with the speaker and the projection part will be described in detail in the following.

The users may continue dialogue after seeing the sentence displayed through the electronic apparatus 100 or perform a necessary operation with respect to the electronic apparatus 100. For example, the electronic apparatus 100 may receive a user operation input for searching for "kimchi stew recipe", and output a search result for the "kimchi stew recipe" based on the user operation input.

Meanwhile, the electronic apparatus 100 may output content including photos or videos. For example, the electronic apparatus 100 may obtain an image of "kimchi stew" together with a sentence such as "You have recently eaten pizza several times. How about kimchi stew for dinner tonight?". The electronic apparatus 100 may display the sentence and image described above to the users through the projection part.

In the above, the electronic apparatus 100 has been described as an apparatus that moves within the home 1 directly and collects dialoguing voices of the users, as an example, but the embodiment is not necessarily limited thereto.

For example, the electronic apparatus 100 may be implemented as a server apparatus or the like capable of communicating with a projector that moves within the home 1. In this case, the electronic apparatus 100 may perform communication with the projector within the home 1 or from a fixed position outside thereof.

Specifically, the electronic apparatus 100 may receive data collected by the projector from within the home 1. Here, the collected data may correspond to voice data of the dialoguing voices of the users. The electronic apparatus 100 may generate a sentence based on the data described and transmit to the projector. The electronic apparatus 100 may transmit a control signal for the generated sentence to be displayed together therewith.

As described, the electronic apparatus 100 may generate, after moving to a location where dialogue of the users is taking place, a sentence by analyzing the dialoguing voices of the users. In other words, the electronic apparatus 100 may display or output a suitable sentence to the users according to a dialogue content of the users. Through the above, the users may be provided with an experience such as dialoguing with the electronic apparatus 100.

An operation of the electronic apparatus 100 for generating a sentence and the like through configurations included in the electronic apparatus 100 will be described in detail below.

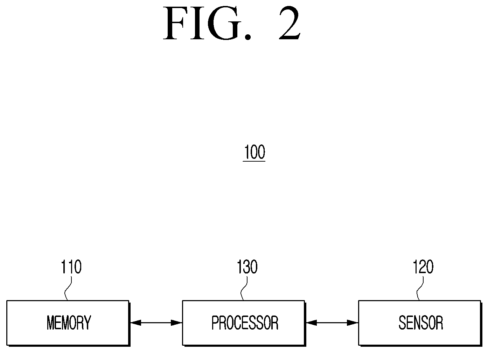

FIG. 2 is a block diagram illustrating a configuration of an electronic apparatus according to one or more embodiments of the disclosure.

Referring to FIG. 2, the electronic apparatus may include a memory 110, a sensor 120, and a processor 130.

Because the electronic apparatus 100 has been described in FIG. 1, redundant descriptions thereof will be omitted.

Memory embedded in the electronic apparatus 100 may be implemented as at least one of a volatile memory (e.g., a dynamic RAM (DRAM), a static RAM (SRAM), or a synchronous dynamic RAM (SDRAM)), or a non-volatile memory (e.g., one time programmable ROM (OTPROM), programmable ROM (PROM), erasable and programmable ROM (EPROM), electrically erasable and programmable ROM (EEPROM), mask ROM, flash ROM, flash memory (e.g., NAND flash or NOR flash), hard disk drive (HDD) or solid state drive (SSD)), and memory attachable to or detachable from the electronic apparatus 100 may be implemented in a form such as, for example, and without limitation, a memory card (e.g., compact flash (CF), secure digital (SD), micro secure digital (micro-SD), mini secure digital (mini-SD), extreme digital (xD), multi-media card (MMC), etc.), an external memory (e.g., USB memory) connectable to a USB port, or the like.

The memory 110 may include one or more storage media (or one or more storage devices). For example, the memory 110 may include a memory assembly including one or more storage media. For example, the one or more storage media may include a permanent memory (e.g., non-volatile memory) such as a hard drive, a flash memory, or a read-only memory (ROM), a semi-permanent memory (e.g., volatile memory) such as a random access memory (RAM), any other suitable type of storage (or a storage assembly), or any combination thereof. The memory 110 may include a cache memory which is a memory of one or more different types used to temporarily store data for functions or features of the electronic apparatus 100. As an unlimited example, the cache memory may be included in the processor 130. The memory 110 may be fixedly embedded in the electronic apparatus 100, or incorporated onto one or more suitable types of components (e.g., subscriber identify module (SIM) card and/or secure digital (SD) card) which can be inserted into the electronic apparatus 100 or removed from the electronic apparatus 100 repeatedly.

For example, the memory 110 may store one or more software applications such as an operating system (or system) software application, a firmware software application, a driver software application, a plug-in (e.g., add-in, add-on, and/or applet) software application, and/or any other suitable software applications. For example, the one or more software applications may include instructions executable by the processor 140. For example, the one or more software applications may include instructions executable by the processor 130. For example, the memory 110 may store instructions callable by an application programming interface (API). For example, the memory 110 may store instructions within a library.

The term 'memory 110' in the disclosure may be used as a meaning including a storing part, a ROM (not shown) in the at least one processor 130, a RAM (not shown), or a memory card (not shown) mounted to the electronic apparatus 100 (e.g., a micro SD card, a memory stick).

The memory 110 according to one or more embodiments may store at least one instruction. The at least one instruction stored in the memory 110 may have the electronic apparatus 100 perform operations when executed individually or collectively by the processor 130.

Here, the at least one instruction may correspond to at least one instruction for the electronic apparatus 100 to obtain content corresponding to a user voice input. The memory 110 may store information necessary for an operation of the electronic apparatus 100 in addition thereto.

Meanwhile, the memory 110 may store at least one artificial intelligence model.

An artificial intelligence model may be configured with a machine learning (deep learning) technology which uses an algorithm that classifies/learns on its own characteristics of input data and element technologies which simulate functions such as recognition and determination of a human brain utilizing the machine learning algorithm.

Here, the artificial intelligence model may be referred to as a neural network model, a training model, an artificial intelligence (AI) model, a deep learning model, and the like.

Examples of element technologies may include at least one from among linguistic understanding technology for recognizing language/characters of humans, visual understanding technology for recognizing objects as if from a viewpoint of a human, inference/prediction technology for logical inference and prediction by determining information, and knowledge representation technology for processing experience information of a human as knowledge data.

The artificial intelligence model is not limited to the above-described examples, and the artificial intelligence model may be implemented as various trained models for the electronic apparatus 100 to perform an operation necessary for obtaining content corresponding to a user voice input.

According to one or more embodiments, the at least one artificial intelligence model stored in the memory 110 may include a model trained to output content corresponding to a previous user input based on the previous user voice input and history information.

Here, the user voice input may mean a voice input by a voice generated by a user. The electronic apparatus 100 may receive a user voice input in a form of a voice signal. For example, the voice generated by a user (user voice) may correspond to a user uttered voice. Here, the user uttered voice may mean a voice generated through an utterance of a user. Meanwhile, a previous user voice history may correspond to a voice input by a voice generated by a user before a current time-point. For example, a voice generated by a user previously (previous user voice) may mean a voice generated through a previous utterance of the user. Here, the utterance of a user (or previous utterance) may correspond to an utterance of one user or utterance (dialogue) generated from two or more users.

Meanwhile, history information may mean information about a use history of the electronic apparatus 100. Here, content may include a sentence. Here, because description of the sentence has been described in detail in FIG. 1, redundant descriptions thereof will be omitted.

Meanwhile, the at least one artificial intelligence model may be trained to output content corresponding to a user voice input by using the user voice input and the history information as input data. However, the embodiment is not limited thereto, and the at least one artificial intelligence model may be trained using data obtained through the previous user voice input and history information as input data.

For example, the electronic apparatus 100 may generate text by converting the user voice, and the at least one artificial intelligence model may be trained to use data including the generated text and history information as input data.

Here, the text may correspond to text obtained by speech to text (STT) processing the user voice as described above. Here, STT may be technology for converting voice to text, and may correspond to technology capable of converting the content spoken by the user to text.

Meanwhile, the artificial intelligence model may be implemented as the large language model (LLM). Here, because description of LLM has been described in detail in FIG. 1, redundant descriptions thereof will be omitted.

According to that described above, an example of an artificial intelligence model necessary in an operation of the electronic apparatus 100 being stored in the memory 110 has been provided and described, but the embodiment is not necessarily limited thereto. For example, even if the artificial intelligence model of the above-described example is not stored in the memory 110, the electronic apparatus 100 may perform various operations such as obtaining content corresponding to the user voice input by using an artificial intelligence model stored in an external device (e.g., server).

The sensor 120 may perform sensing of a space. Here, the space may include a space in the surrounding of the electronic apparatus 100 (or surrounding space) and other spaces. Here, the surrounding space may mean a space in which the electronic apparatus 100 can be positioned, or a space of an extent that can be sensed by the electronic apparatus 100 according to a sensing range of the sensor 120.

Here, the space in which the electronic apparatus 100 can be positioned may correspond to a space in which the electronic apparatus 100 can be positioned by being moved or driven by a user or autonomously. However, the embodiment is not limited thereto.

For example, if the space is implemented as a space within the home, the space in the surrounding (or surrounding space) may mean a space within a certain distance from the position of the electronic apparatus 100. Here, the certain distance may be defined by a sensing range of the sensor 120.

The sensor 120 may include at least one from among an image sensor, a LiDAR sensor, an obstacle detection sensor, a sound sensor (microphone), and a driving detection sensor. The sensor 120 may generate data (e.g., sensing data) by sensing the space (or surrounding space).

The electronic apparatus 100 may include one sensor 120, but is not limited thereto, and may be implemented as a plurality of sensors 120. For convenience below, it will be described assuming that the sensor 120 is implemented as at least one sensor 120.

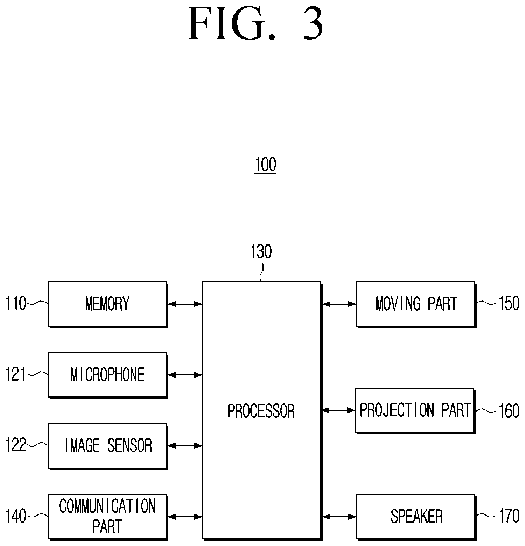

According to an embodiment, the sensor 120 may include a microphone and an audio sensor. The above will be described in detail in FIG. 3.

The at least one processor 130 may perform an overall control operation of the electronic apparatus 100.

The at least one processor 130 may be implemented as a digital signal processor (DSP) that processes digital signals, a microprocessor, or a time controller (TCON). However, the embodiment is not limited thereto, and may include one or more from among a central processing unit (CPU), a micro controller unit (MCU), a micro processing unit (MPU), a controller, an application processor (AP), a graphics-processing unit (GPU), a communication processor (CP), or an ARM processor, or may be defined by the relevant term. In addition, the at least one processor 130 may be implemented with a System on Chip (SoC) or a large scale integration (LSI) in which a processing algorithm is embedded, and may be implemented in a form of a field programmable gate array (FPGA). In addition, the at least one processor 130 may perform various functions by executing computer executable instructions stored in memory. Meanwhile, in FIG. 2, although the electronic apparatus 100 has been shown as including only one processor, at implementation, a plurality of processors (e.g., CPU + GPU, CPU + DSP) may be included.

Meanwhile, instructions stored in the above-described memory 110 may have the electronic apparatus 100 perform operations as described below when executed individually or collectively by the processor 130.

According to one or more embodiments, the electronic apparatus 100 may obtain, based on data, similar history information corresponding to a user voice input from among the history information. Here, the data may correspond to data obtained from a space through the at least one sensor 120.

Here, the space may correspond to a space corresponding to a user voice input (surrounding space) from among the space. Here, the space corresponding to the user voice input may correspond to a space in which the user voice is generated/uttered. For example, the space in which the user voice generated may mean a space included within a defined distance based on a position identified as the user voice having been generated/uttered from among the space surrounding the electronic apparatus 100.

For example, the data obtained from the space corresponding to the user voice input may correspond to sensing data obtained by the electronic apparatus 100 having sensed the space corresponding to the user voice input through the at least one sensor 120.

Specifically, the electronic apparatus 100 may analyze voice data detected through the sensor 120 and estimate direction and distance of the sound based on time difference, sound pressure, sound pattern, or the like. Through the above, the electronic apparatus 100 may identify the location/position where the user voice was generated/uttered.

The electronic apparatus 100 may obtain similar history information based on data. Here, the similar history information may correspond to information corresponding to the user voice input from among the history information. For example, the similar history information may mean history information similar with a current situation from among the history information.

Here, the electronic apparatus 100 may obtain data from a space corresponding to the user voice input, and obtain information about a current situation based on the data. Here, the data may correspond to the above-described sensing data. Here, the information about the current situation may be information which the electronic apparatus 100 obtained by analyzing the sensing data, and may mean state information at a current time-point such as, for example, and without limitation, speakers (users) in the surrounding of the electronic apparatus 100, positions, time, and the like.

For example, the electronic apparatus 100 may obtain information indicating that 'the speaker is A, the user voice of A was generated from the living room, and the current time is 7:00 P.M.' through the sensing data. In this case, the electronic apparatus 100 may obtain the similar history information such as 'voice record of A', 'voice record of A uttering in the living room', 'voice record of A recorded at 7:00 P.M. from the living room', or the like from among the history information.

According to an embodiment, the electronic apparatus 100 may identify at least one group corresponding to the user voice input from among a plurality of groups included in the history information based on data.

Here, the group may mean a set of history information classified based on a common category (e.g., speaker, location, time, etc.) and may be grouped into a specific database form.

For example, the electronic apparatus 100 may identify a group that is matched with information about a current situation from among the plurality of groups based on sensing data. Here, the group that is matched may mean a group that matches with information about a current situation from among several groups or that includes history information with high relevance.

Here, the electronic apparatus 100 may identify the group that is matched with information about the current situation from among the plurality of groups as the group corresponding to the user voice input.

According to an embodiment, the electronic apparatus 100 may obtain information belonging to at least one group from among the history information as the similar history information.

Here, the electronic apparatus 100 may obtain all history information belonging to the identified at least one group as the similar history information, but is not necessarily limited thereto.

In an example, the electronic apparatus 100 may obtain a portion of information corresponding to a current time from among the information belonging to the at least one group as the similar history information.

Specifically, the electronic apparatus 100 may obtain, based on each of the at least one group including information about the times when the history information is recorded, the portion of information corresponding to the current time as the similar history information.

For example, if each of the at least one group includes information about each of a plurality of time periods, the electronic apparatus 100 may identify a time period closest to the current time from among the plurality of time periods. The electronic apparatus 100 may obtain history information recorded at the identified time period as the similar history information.

According to one or more embodiments, the electronic apparatus 100 may obtain content corresponding to the user voice input through an artificial intelligence model using a prompt obtained based on the similar history information.

Specifically, the electronic apparatus 100 may generate a prompt based on the similar history information. Here, the prompt may correspond to a text (instruction or query) for inputting in the artificial intelligence model.

Here, the artificial intelligence model may correspond to a model trained to output content corresponding to the previous user voice based on the previous user voice input and history information as described above.

For example, the prompt may mean an input inquiry or instruction provided to guide content output from a model trained based on the history information and the user voice input.

According to an embodiment, the electronic apparatus 100 may obtain a prompt that includes a text converted from the user voice output and the similar history information.

In other words, the electronic apparatus 100 may obtain the similar history information corresponding to the current situation from among the history information and a prompt including, or based on, a currently uttered sentence.

For example, the electronic apparatus 100 may obtain information about a current situation indicating that 'the speaker is the grandfather, that the grandfather is preparing to administer medication, and is speaking about a topic of what medication to take' from the user voice.

In this case, the electronic apparatus 100 may identify at least one group corresponding to the current situation from among the plurality of groups. The electronic apparatus 100 may obtain information that 'the grandfather administered blood pressure medication on June 30, 2024' from the information included in the identified group.

Accordingly, the electronic apparatus 100 may obtain a prompt that includes information that 'the grandfather administered blood pressure medication on June 30, 2024' and 'is currently speaking about medication to take'.

Meanwhile, the electronic apparatus 100 may obtain content corresponding to the user voice input through the artificial intelligence model based on the prompt.

For example, the electronic apparatus 100 may input the obtained prompt in the artificial intelligence model. The electronic apparatus 100 may obtain content output by the artificial intelligence model.

Here, the artificial intelligence model may correspond to a model stored in the memory 110 of the electronic apparatus 100, but is not necessarily limited thereto, and may correspond to a model stored in an external device (e.g., server, etc.).

In this case, the electronic apparatus 100 may transmit the obtained prompt to the external device, and the external device may input the prompt in the artificial intelligence model and obtain the content. The electronic apparatus 100 may receive the obtained content from the external device.

Here, the output content may correspond to an expressed product which includes dialogue-type sentences and the like corresponding to the user voice input of users. For example, the content may include dialogue sentences and photos, images, and the like associated with the user voice. Here, the content including the dialogue-type sentences may be referred to as dialogue-type content.

Here, the dialogue-type sentences may mean sentences composed to analyze the user voice and respond thereto or composed to deliver a specific meaning. Here, the sentences may be composed of a combination of a plurality of words.

For example, the electronic apparatus 100 may generate, based on the prompt including information that 'the grandfather administered blood pressure medication on June 30, 2024' and 'is currently speaking about medication to take', a sentence of "how is your condition today? Did you take your blood pressure medication?".

As described, the electronic apparatus 100 may generate, rather than using all of the pre-stored history information, dialogue-type content using the similar history information corresponding to the user voice input.

Accordingly, because the electronic apparatus 100 can generate content more suitable to context according to the user voice, the electronic apparatus 100 may provide the user with a use experience such as dialoguing with an actual person.

In FIG. 2, although the electronic apparatus 100 has been shown as including only basic configurations, the electronic apparatus 100 may further include various configurations in addition to the above-described configurations.

FIG. 3 is a detailed block diagram illustrating a detailed configuration of an electronic apparatus according to one or more embodiments of the disclosure.

Referring to FIG. 3, the electronic apparatus 100 may include the memory 110, a microphone 121, an image sensor 122, the processor 130, a communication part 140, a moving part 150, a projection part 160, and a speaker 170. Here, because the memory 110 and the processor 130 have already been described, the above will be described excluding the redundant descriptions thereof.

The electronic apparatus 100 may include the microphone 121 for receiving a user voice. The microphone 121 may transmit the received voice to the processor 130. Then, the electronic apparatus 100 may perform voice recognition by inputting the received user voice in a voice recognition model.

For example, the electronic apparatus 100 may perform voice recognition of the user voice by performing speech to text (STT) to the user voice. The microphone 121 may receive the user voice, and transmit the received user voice to the electronic apparatus 100.

Then, the electronic apparatus 100 may perform voice recognition by inputting the received user voice to the voice recognition model. For example, the electronic apparatus 100 may perform voice recognition of the user voice by performing speech to text (STT) to the user voice.

According to an embodiment, the electronic apparatus 100 may obtain voice data corresponding to the user voice input through the microphone 121. Here, the voice data corresponding to the user voice input may correspond to data that has been converted from an audio signal comprising the user voice of the user to an electrical signal.

For example, the electronic apparatus 100 may obtain voice data from a space where the user voice input is located (e.g., a space in which the user voice is generated/uttered by the user) through the microphone 121.

Here, the voice data may correspond to data that converted the user voice obtained through the microphone 121 to digital or analog signals.

The electronic apparatus 100 may include the image sensor 122. The image sensor may be an electronic device that detects optical signals and converts the same to digital or analog signals.

For example, the image sensor 122 may be implemented as a camera. Here, image data may correspond to data obtained by converting optical information detected through the image sensor in digital form.

Specifically, the image data may include information that expresses brightness, colors, patterns and the like of a scene obtained through the image sensor digitally. For example, the image data may be implemented with a photo that captured an arrangement or movement of an object in the surrounding of the electronic apparatus 100. However, the embodiment is not limited thereto.

According to an embodiment, the electronic apparatus 100 may obtain image data through the image sensor 122 of a space where the user voice input was received through the microphone 121. For example, the electronic apparatus 100 may obtain image data of the space surrounding a location of the user that was/is responsible for the user voice input (e.g., the space in which the user voice is generated/uttered by the user).

For example, the electronic apparatus 100 may identify a position of the space corresponding to the user voice input (e.g., a position where the user voice is generated/uttered by the user) based on the voice data obtained through the microphone 121. Because the above has been described in detail in FIG. 2, redundant descriptions thereof will be omitted.

Meanwhile, the electronic apparatus 100 may identify at least one group from among the plurality of groups based on at least one from among the voice data obtained through the microphone 121 and the image data obtained through the image sensor 122.

Specifically, the electronic apparatus 100 may identify at least one group corresponding to the user voice input based on at least one from among the voice data and the image data. Here, because the group corresponding to the user voice input has been described in FIG. 2, redundant descriptions thereof will be omitted.

Here, the plurality of groups may be distinguished based on at least one from among a plurality of speakers and a plurality of locations.

For example, the history information may comprise a plurality of groups distinguished by the plurality of speakers. At this time, each of the plurality of groups may include use history of specific speakers (e.g., voice records, device operating records, viewing records, etc.).

In addition, the history information may comprise a plurality of groups distinguished by the plurality of locations. Here, the location may mean the position where a specific speaker has uttered. At this time, each of the plurality of groups may include use history from a specific location.

Meanwhile, the plurality of groups may be distinguished based on both the plurality of speakers and the plurality of locations. At this time, each of the plurality of groups may include a history of one or more specific speakers having used the electronic apparatus 100 at one or more specific locations.

For example, the plurality of groups may include a first group of 'speaker: A, location: living room', a second group of 'speaker: A, location: kitchen', a third group of 'speaker: B, location: main bedroom', and the like.

Meanwhile, in order to identify a group corresponding to the user voice input, the electronic apparatus 100 may use at least one from among the voice data and the image data.

In other words, the electronic apparatus 100 may identify at least one from among the speaker and the location based on at least one from among the voice data and the image data (i.e. the electronic apparatus may identify the speaker based the voice data and/or the location based on the image data). The electronic apparatus 100 may identify a group corresponding to the identified speaker and location.

According to an example, the electronic apparatus 100 may identify at least one group including voice records corresponding to voice data from among the plurality of groups. For example, the voice record corresponding to the voice data may mean a voice record that matches with the voice data.

Here, the voice record that matches with the voice data may mean a record stored with a voice profile that matches or is similar with the characteristics of the input voice data. Here, the voice profile may mean information that expressed unique voice characteristics (e.g., frequency, intonation, tone, etc.) of a specific speaker as digital data.

In addition, the electronic apparatus 100 may identify a group corresponding to a relevant speaker by identifying the speaker based on voice data.

Specifically, the electronic apparatus 100 may identify a speaker of a voice (e.g., uttered voice) using a pre-stored voice profile. The electronic apparatus 100 may identify a speaker utilizing a voice ID technology.

Voice ID technology may identify an identity based on a unique voice profile of a speaker, and may mean a voice-based biometric technology. The process described may be performed through the voice recognition technology of converting a voice into digital data and matching the pattern.

Here, matching the pattern may mean a process of identifying similarity or whether there is a match by comparing the characteristics of the input data with pre-stored data.

For example, the electronic apparatus 100 may analyze the unique voice characteristics of a current speaker according to the user voice, and compare the same with the pre-stored voice profile.

In this case, the electronic apparatus 100 may identify at least one group with use history of the identified speaker stored. Then, the electronic apparatus 100 may obtain history information included in the at least one identified group as the similar history information.

For example, if the electronic apparatus 100 identifies the speaker as A, the first group from among the above-described first to third groups may be identified as the group corresponding to the user voice input.

Meanwhile, the electronic apparatus 100 may also identify a position of the space corresponding to the user voice input (e.g., a location where the user voice is generated) based on the voice data.

For example, the electronic apparatus 100 may identify 'information that the position where the user voice is generated is the main bedroom, and that the speaker is B' from the voice data obtained from the user voice of the user. At this time, the electronic apparatus 100 may identify the third group from among the above-described first to third groups as the group corresponding to the current user voice.

Meanwhile, the electronic apparatus 100 may obtain sensing data from the user voices of the plurality of speakers.

According to an example, the above-described plurality of groups may include at least one dialogue group. Here, a dialogue group may mean a group that includes the voice records of a plurality of dialogue participants from among the plurality of speakers.

Specifically, each of the plurality of dialogue participants may mean two or more people that provided respective user voices by participating in the same dialogue. In other words, if two or more dialogue participants participated in a dialogue at the same time period, the dialogue group may include voice records of the relevant dialogue.

In other words, each of the plurality of groups may include not only a voice record of a single speaker, but also voice records of the plurality of speakers (dialogue participants).

Meanwhile, the electronic apparatus 100 may identify that a plurality of users is positioned in a space based on at least one from among the voice data and the image data. Here, the space may correspond to a space corresponding to a general location of where the user voice input was/is received (surrounding space).

For example, the electronic apparatus 100 may identify whether the plurality of users is positioned in the space based only on voice data. Specifically, the electronic apparatus 100 may identify whether data according to voices of two or more users are included in the voice data.

Alternatively or additionally, the electronic apparatus 100 may identify whether the plurality of users is positioned in the space based on image data. Specifically, the electronic apparatus 100 may identify whether the plurality of users is positioned in the space by counting a number of detected people by using an object detection algorithm based on the image data.

Here, the object detection algorithm may mean an algorithm for detecting a form of a person. The object detection algorithm may mean an algorithm that identifies a position of a specific object (e.g., person) in the image data and classifies the relevant object.

The electronic apparatus 100 may detect a human object by inputting the image data in the artificial intelligence model, and identify whether there is a plurality of users based on the detected number of objects. Here, the artificial intelligence model may correspond to a model trained to output a number of specific objects based on the image data.

The method with which the electronic apparatus 100 identifies whether the plurality of users is present in the space from the image data is not necessarily limited to the above-described example, and the electronic apparatus 100 may identify whether the plurality of users is positioned in the space by using various methods in addition to that described above.

Meanwhile, the electronic apparatus 100 may identify whether the plurality of users is positioned in the space based on both the image data and the voice data.

For example, the electronic apparatus 100 may identify that two or more human objects are present by analyzing the image data. The electronic apparatus 100 may analyze the voice data and identify that, at this time, voices corresponding to different voice profiles are present in the voice data. In this case, the electronic apparatus 100 may identify that two or more users are present in the surrounding space.

The electronic apparatus 100 may identify, in addition to the above-described examples, whether a plurality of users is present using various methods such as a method of using sensing data other than the voice data and the image data.

The electronic apparatus 100 may identify, based on a plurality of users being identified as positioned in the space corresponding to the user voice input, at least one group from among at least one dialogue group. Here, the identified at least one group may mean a group including voice records corresponding to voice data.

Here, the voice records corresponding to voice data may mean records stored with voice profiles that are a match or similar with the characteristics of the input voice data as described above.

If a plurality of users is positioned in the space corresponding to the user voice input of the electronic apparatus 100, the voice records corresponding to voice data may mean records stored with a plurality of voice profiles that match or is similar with each of a plurality of characteristics included in the voice data. Here, the plurality of characteristics may mean the characteristics of user voices of each of the plurality of users.

For example, in addition to the above-described first group to third group in the plurality of groups, a fourth group (dialogue group) that includes voice records of speakers A and B may be included. If the plurality of characteristics is included in the voice data of the electronic apparatus 100, the fourth group may be identified based on each of the plurality of characteristics matching or being similar with the voice profile of A and the voice profile of B.

Meanwhile, the above-described plurality of groups may be distinguished based on the plurality of locations.

According to an example, the electronic apparatus 100 may identify a location corresponding to an uttered space from among the plurality of locations based on image data of the electronic apparatus 100. Here, the uttered space may correspond to a space identified as where the user voice is generated/uttered from among the space corresponding to the user voice input.

For example, the electronic apparatus 100 may identify whether the space identified as the uttered space corresponds to one from among the plurality of locations corresponding to each of the above-described plurality of groups. The electronic apparatus 100 may identify, based on one from among the plurality of locations being identified as a location that matches with the uttered space, the relevant location as the location corresponding to the uttered space.

Meanwhile, the electronic apparatus 100 may identify at least one group corresponding to the identified location from among the plurality of groups.

For example, if the electronic apparatus 100 identifies the location corresponding to the uttered space as the 'living room', the electronic apparatus 100 may identify at least one group stored with use history in the 'living room'.

Meanwhile, if the plurality of groups is distinguished based on the plurality of locations, each of the plurality of groups may include voice records recorded at the relevant location. However, the embodiment is not limited thereto, and each of the plurality of groups may include other information in addition to the voice records.

For example, the electronic apparatus 100 may identify at least one group that includes records corresponding to control of at least one external device from an identified location. Here, the record corresponding to control of an external device may mean a record of having controlled an external device through the electronic apparatus 100.

Here, the external device may mean a device controllable through the electronic apparatus 100 (e.g., air conditioner, refrigerator, external speaker, etc.). Here, the record of having controlled the external device may mean a breakdown of controlling an operation of the external device or executing a command.

Here, the external device may correspond to a device controllable through a server apparatus capable of communicating with the electronic apparatus 100. In this case, the electronic apparatus 100 may provide a control signal for controlling the external device to the server apparatus, and the server apparatus may control the external device based on the control signal.

Here, the server apparatus may be implemented as an IoT server (IoT Hub). The IoT server may correspond to an apparatus that receives, processes, stores data collected from various IoT devices centrally, and relays communication between devices.

The electronic apparatus 100 may generate, based on identifying at least one group that includes records of having controlled a specific external device, content corresponding to the relevant record.

Specifically, the electronic apparatus 100 may generate similar history information that includes relevant records, and obtain a prompt based therefrom. The electronic apparatus 100 may generate content including dialogue-type sentences by inputting the obtained prompt into the artificial intelligence model.

For example, if the location corresponding to the uttered space is identified as the 'living room', the electronic apparatus 100 may identify a group that includes 'a history of having operated an air conditioner in the living room'. In this case, the electronic apparatus 100 may obtain similar history information that includes information that 'temperature of the air conditioner was operated to x degrees Celsius in the living room on X month X date', and obtain a prompt including this.

The similar history information may be input as the obtained prompt into the artificial intelligence model, which generates/outputs a sentence of "the air conditioner in the living room was operated to x degrees a few days ago. Shall I adjust the indoor temperature to x degrees?".

The communication part 140 may be a configuration that performs communication with external devices of various types according to communication methods of various types. The communication part 140 may include a Wi-Fi module, a Bluetooth module, an infrared communication module, a wireless communication module, and the like. Here, each communication module may be implemented in at least one hardware chip form.

The Wi-Fi module and the Bluetooth module may perform communication in a Wi-Fi method and a Bluetooth method, respectively. When using the Wi-Fi module or the Bluetooth module, various connection information such as a service set identifier (SSID) and a session key may first be transmitted and received, and after communicatively connecting using the same, various information may be transmitted and received.

The infrared communication module may perform communication according to an infrared communication (Infrared Data Association (IrDA)) technology of transmitting data wirelessly in short range by using infrared rays present between visible rays and millimeter waves.

The wireless communication module may include at least one communication chip that performs communication according to various wireless communication standards such as, for example, and without limitation, ZigBee, 3rd Generation (3G), 3rd Generation Partnership Project (3GPP), Long Term Evolution (LTE), LTE Advanced (LTE-A), 4th Generation (4G), 5th Generation (5G), and the like, in addition to the above-described communication methods.

In addition thereto, the communication part 140 may include at least one from among wired communication modules that perform communication using a local area network (LAN) module, an Ethernet module, a pair cable, a coaxial cable, an optical fiber cable, an ultra wide-band (UWB) module, or the like.

For example, the electronic apparatus 100 may receive data for obtaining content corresponding to the user voice input from the external device through the communication part 140. Here, the data for obtaining content may correspond to history information (or similar history information).

In this case, the electronic apparatus 100 may transmit data obtained from the surrounding space of the electronic apparatus 100 to the external device, and receive similar history information corresponding to the data from the external device. Here, the similar history information may correspond to information identified as corresponding to the user voice input from among the history information stored in the external device. However, the embodiment is not limited thereto.

Meanwhile, the electronic apparatus 100 may transmit a signal comprising a request to obtain content corresponding to the user voice input to the external device (e.g., server) and the like through the communication part 140. Alternatively, the electronic apparatus 100 may transmit a signal comprising a request to obtain content based on similar history information to the external device and the like. The electronic apparatus 100 may receive content obtained by the external device.

Meanwhile, the electronic apparatus 100 may further include an interface such as an HDMI port, a DP, RGB, DVI, USB, and Thunderbolt for receiving video/audio signals by being connected to the external device or servers. The HDMI, DP, and Thunderbolt may be ports capable of transmitting video and audio signals simultaneously. The electronic apparatus 100 may output the similar history information, the prompt, the content (content corresponding to the user voice input), and the like by performing various processing such as demuxing, decoding, and scaling with respect to the various signals received from the external device and the server and the like that perform communication with the external device through the communication part and the various interfaces described above.

The moving part 150 may be a configuration corresponding to the movement of the electronic apparatus 100. For example, the moving part 150 may move the electronic apparatus 100. To this end, the moving part 150 may include a motor, wheels, and the like, and the electronic apparatus 100 may be moved through movement of the wheels. Meanwhile, at implementation, a caterpillar or the like may be used instead of the wheels, and if the electronic apparatus 100 is implemented as a drone or the like, a propeller may be used instead of the wheels.

According to an embodiment, the electronic apparatus 100 may obtain a voice input position corresponding to the user voice input based on initial data when the user voice input is received.

Specifically, the electronic apparatus 100 may receive the user voice input. For example, the electronic apparatus 100 may receive the user voice input through the at least one sensor 120 while sensing a space. In other words, the electronic apparatus 100 may detect a user voice through the at least one sensor 120 while sensing the space.

Meanwhile, the initial data may correspond to data obtained by the electronic apparatus 100 from the space through the at least one sensor 120. For example, the initial data may correspond to initial data (initial sensing data) obtained by sensing the space.

Here, the space may correspond to a space (whole space) that includes the above-described space corresponding to the user voice input. In other words, the space may include a location other than the location where the user voice is generated/uttered.

The electronic apparatus 100 may obtain the voice input position corresponding to the user voice input based on the initial data. Here, the voice input position corresponding to the user voice input may correspond to a position where the user voice (e.g., uttered voice of the user) is identified as having been generated/uttered.

Here, because the operation of the electronic apparatus 100 identifying the position where the user voice is generated/uttered has been described above, redundant descriptions thereof will be omitted.

The electronic apparatus 100 may control the moving part 150 and the at least one sensor to sense the space corresponding to the user voice input by moving to a position of a pre-set distance from the obtained position (voice input position).

Here, the pre-set distance may mean a set distance for the electronic apparatus 100 to clearly receive the user voice.

Here, the clearly receiving may mean a state in which voice data can be accurately analyzed due to a signal-to-noise ratio (SNR) being high and the user voice signal being superior compared to noise. In other words, the defined distance may mean a distance set for the signal-to-noise ratio (SNR) to be maintained at a certain level of more in order to clearly receive the user voice.

The electronic apparatus 100 may obtain data from a space corresponding to the user voice input by moving to a destination which is at a defined distance from the obtained position. The electronic apparatus 100 may obtain similar history information based on data obtained while moving to the destination above, and obtain a prompt based on the similar history information.

The projection part 160 may project an image. The projection part 160 may project an image using light sources such as a lamp or an LED at a projection area. For example, the projection part 160 may project light corresponding to an image through a lens and/or mirror. Accordingly, the projected light may form an image at the projection area.

As described, the projection part 160 may project an image in an ultra-short focus method, a projection-type method, and a hybrid-type method capable of switching between the ultra-short focus method and the projection-type method.

For example, in the case of a hybrid-type projector, a plurality of lenses (e.g., ultra-short focus lens, projection-type lens) may be provided in the projection part 160, and in response to a change in a projection method, a corresponding lens may be used to project an image.

For example, the electronic apparatus 100 may project an obtained content to the projection area through the projection part 160. If the content is a dialogue-type content that includes dialogue-type sentences, the electronic apparatus 100 may project the generated sentences at the projection area near the user (speaker). Here, the projection area near the user may mean a projection area where the projected image is visually recognizable to the user from a current position. However, the embodiment is not limited thereto.

The speaker 170 may output voice signals. The speaker 170 may include at least one speaker unit (or audio amplifier).

In an example, the speaker 170 may be implemented as at least one full range speaker unit designed to output nearly all sound bands of audible frequencies, and may also be implemented as a speaker array including a plurality of speaker units for playing back different frequency bands.

For example, the electronic apparatus 100 may output the obtained content through the speaker 170. If the content is the dialogue-type content that includes dialogue-type sentences, the electronic apparatus 100 may convert the generated sentences to voice signals and output through the speaker 170 near the user (speaker). Here, near the user may mean a position where the voice being output through the speaker 170 is recognizable to the user. However, the embodiment is not limited thereto.

Meanwhile, in FIG. 3, although the electronic apparatus 100 included with various additional configurations is shown, the electronic apparatus 100 may be implemented with a portion of the configurations from among the shown configurations omitted. In addition, although not shown, other configurations may be further included.

For example, the electronic apparatus may include a display.

The display may be a configuration for displaying an operating state or a notification message, a UI screen, and the like of the electronic apparatus 100. The display may be implemented as a display of various types such as, for example, and without limitation, a liquid crystal display (LCD), an organic light emitting diode (OLED) display, a plasma display panel (PDP), or the like. In the display, a driving circuit, which may be implemented in a form of an amorphous silicon thin film transistor (a-Si TFT), a low temperature poly silicon (LTPS) TFT, an organic TFT (OTFT), or the like, a backlight unit, and the like may be included. Meanwhile, the display may be implemented as a touch screen coupled with a touch sensor, a flexible display, a three-dimensional display (3D display), or the like. Alternatively, the display may be implemented with only one or a plurality of light emitting devices.

The electronic apparatus 100 may change a display state of the display for the user to intuitively identify a state of the electronic apparatus 100 according to various states such as when the electronic apparatus 100 is in a turned-on state, when in a normally operating state, or when in a state of power shortage or an error state.

For example, the electronic apparatus 100 may control the display to display a UI corresponding to the obtained content. Here, the UI corresponding to the content may correspond to a graphic element that visually indicates content corresponding to the voice input of the user.

However, the embodiment is not limited thereto, and the electronic apparatus 100 may control, before displaying the UI corresponding to the content, the display to display a UI for displaying the obtained prompt in text.

However, the display configuration is merely a portion from among the various embodiments, and the display configuration may be omitted. In other words, the electronic apparatus 100 may be an apparatus that directly includes the display, or an apparatus connected to an external device.

For example, if the electronic apparatus 100 is implemented as a set top box, a one-connect box, a projector, or the like, the above-described operations of the electronic apparatus 100 may be performed in an electronic apparatus that does not include the display.

In this case, the processor 130 may obtain a UI to display based on the obtained content, and provide the obtained UI to an external display apparatus (apparatus including the display) through the communication part 140. The external display apparatus may display the provided UI through the display included in the external display apparatus.

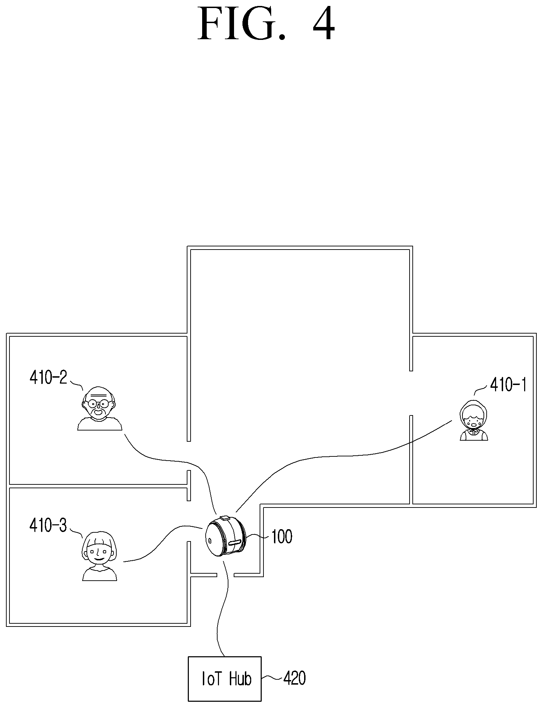

FIG. 4 is a diagram illustrating an operation of an electronic apparatus according to one or more embodiments of the disclosure.

Referring to FIG. 4, the electronic apparatus 100, a plurality of users 410-1 to 410-3, and an IoT Hub 420 are shown.

The electronic apparatus 100 may perform communication with the IoT Hub 420 by moving within the home. At this time, the electronic apparatus 100 may sense the surrounding plurality of users 410-1 to 410-3 positioned within the home. Here, the plurality of users 410-1 to 410-3 may correspond to a first user 410-1, a second user 410-2, and a third user 410-3 positioned in difference spaces (e.g., rooms).

The electronic apparatus 100 may sense where each of the plurality of users 410-1 to 410-3 is positioned and store use history of each of the plurality of users 410-1 to 410-3.

For example, the electronic apparatus 100 may sense the user voices of each of the plurality of users 410-1 to 410-3 and store these as use history (voice records). In addition, the electronic apparatus 100 may store a device control history of each of the plurality of users 410-1 to 410-3 as use history. However, the embodiment is not limited thereto, and the electronic apparatus 100 may store viewed content and search history, and the like, of each of the plurality of users 410-1 to 410-3.

The electronic apparatus 100 may store information about the use history as a plurality of groups distinguished by category. Here, the category may correspond to the speaker, the location, and the like. Because the above has been described in FIG. 3, redundant descriptions thereof will be omitted.

Meanwhile, the electronic apparatus 100 may store dialoguing voices of a portion from among the plurality of users (e.g., first user 410-1 and second user 410-2) from among the plurality of users 410-1 to 410-3 as voice records.

The electronic apparatus 100 may provide information about the stored use history to the IoT Hub 420. The IoT Hub 420 may classify the provided information about the use history by category and store it in a form of a database.

Then, if the electronic apparatus 100 transmits a signal requesting a portion of the information (e.g., similar history information) from among the history information to the IoT Hub 420, the IoT Hub 420 may provide information corresponding to the request to the electronic apparatus 100.

Meanwhile, the electronic apparatus 100 may detect the user voice after having stored the information about the use history of each of the plurality of users 410-1 to 410-3. The electronic apparatus 100 may identify the position where the user voice is generated/uttered and move to the identified position. The electronic apparatus 100 may sense a user voice of a specific user from the moved position (i.e. the position to which the electronic apparatus has moved), and sense the space corresponding to the user voice input from the moved position.

For example, the electronic apparatus 100 may move to a room in which the second user 410-2 is positioned if the detected user voice is identified as having been generated/uttered from the room in which the second user 410-2 is positioned. The electronic apparatus 100 may sense the user voice of the second user 410-2 and the room in which the second user 410-2 is positioned from a corresponding position.

Accordingly, the electronic apparatus 100 may identify a group matching with the voice of the second user 410-2 from voice data obtained from the user voice. Alternatively, the electronic apparatus 100 may identify a group matching with an image data obtained from the room in which the second user 410-2 is positioned.

Here, the identified group may mean at least one group from among the plurality of groups classified according to a plurality of categories. Because the above has been described above, redundant descriptions thereof will be omitted.

The electronic apparatus 100 may obtain history information included in the identified group as similar history information. Here, the history information or the similar history information may correspond to information stored in group form (database by category) in the electronic apparatus 100 or the IoT Hub 420.

The electronic apparatus 100 may obtain a prompt for inputting in the LLM using the obtained similar history information. Here, the LLM may correspond to a model trained to output dialogue sentences corresponding to the user voice (or dialogue sentences corresponding to the user input according to a current utterance). Here, the LLM may correspond to a model stored in the electronic apparatus 100 (internal LLM) or a model stored in the IoT Hub 420 (external LLM). In addition, the LLM may mean both the internal LLM and the external LLM.

The electronic apparatus 100 may input the obtained prompt in the internal LLM, generate the dialogue-type sentences, and display the same. For example, the electronic apparatus 100 may project the output sentences at a projection surface (e.g., wall surface, floor, or ceiling) surrounding the second user 410-2 in a projection image form, or output in a voice form.

Alternatively, the electronic apparatus 100 may provide the obtained prompt to the IoT Hub 420, and receive dialogue sentences generated from the external LLM stored in the IoT Hub 420. The electronic apparatus 100 may display the provided dialogue sentences in the same method as the method described above.

The electronic apparatus 100 may detect at least one user voice from among the plurality of users 410-1 to 410-3 as described above, and generate and display dialogue sentences corresponding thereto. The embodiment will be described in detail below through the detailed configurations of the electronic apparatus 100 and the IoT Hub 420.

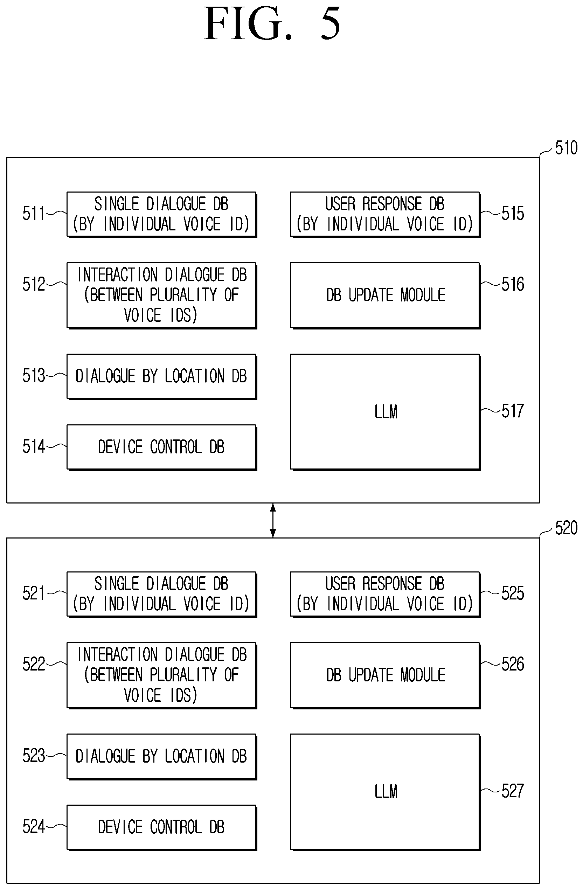

FIG. 5 is a diagram illustrating an electronic apparatus and an external device according to one or more embodiments of the disclosure.

Referring to FIG. 5, an electronic apparatus 510 and an IoT Hub 520 are shown.

The electronic apparatus 510 may include a single dialogue DB 511, an interaction dialogue DB 512, a dialogue by location DB 513, a device control DB 514, a user response DB 515, a DB update module 516, and a LLM 517.

Here, the single dialogue DB 511 may correspond to a database (DB) that stores dialogue content of individual users. Here, the uttered content may be stored in a voice record form.

For example, the single dialogue DB 511 may store the uttered content by voice ID of individual users. Here, because the voice ID has been described above, redundant descriptions thereof will be omitted.

The interaction dialogue DB 512 may correspond to a DB that stores uttered content (dialogue) of a plurality of users. For example, the interaction dialogue DB 512 may store uttered dialogue content by voice ID of each of the plurality of users. Here, the interaction dialogue DB 512 may correspond to the above-described dialogue group. Here, because the dialogue group and the like have been described above, redundant descriptions thereof will be omitted.

Each of the above-described single dialogue DB 511 and interaction dialogue DB 512 may be formed with a plurality of detailed DBs (detailed groups) distinguished by speaker. The each of the plurality of detailed DBs may store voice records of dialogue performed by a specific speaker (single speaker) or plurality of dialogue participants (speakers).

The dialogue by location DB 513 may correspond to a DB that stores dialogue content by location. For example, the dialogue by location DB 513 may be formed of a plurality of detailed DBs (detailed groups) distinguished according to a plurality of dialogue locations. Here, each of the detailed DBs may store dialogue content recorded from a specific location.

The device control DB 514 may store a device control history according to the user, the location, the situation, and time. For example, the device control DB 514 may be formed of a plurality of detailed DBs distinguished according to the user, the location, and the like. Here, each of the plurality of detailed DBs may include a record of having controlled a specific device (external device) under conditions such as a specific user or location.

The user response DB 515 may correspond to a DB that stores responses of users by user if the electronic apparatus 510 displays a generated sentence to the user. For example, if the electronic apparatus 510 generated a sentence, the electronic apparatus 510 may move near the user (speaker) and output a sentence through the speaker or the projection part.

In this case, the electronic apparatus 510 may store the responses (affirmative or negative) of the users with respect to the output dialogue sentence. Specifically, the electronic apparatus 510 may receive, based on there being an utterance (reply) of the user with respect to a dialogue sentence that is a question-type, a voice according to the utterance of the user and store in the user response DB 515 as a voice record.

The DB update module 516 may update at least one DB according to the above-described user response.

For example, the DB update module 516 may update, based on a voice record corresponding to the above-described response, the above-described single dialogue DB 511, the interaction dialogue DB 512, and the dialogue by location DB 513. In other words, the electronic apparatus 510 may update at least one pre-stored DB according to the speaker, the location, and the like corresponding to the above-described voice record.

The LLM 517 stored in the electronic apparatus 510 may correspond to the internal LLM. Here, the LLM 517 may correspond to a model trained to output content including dialogue sentences based on the history information.

Here, the electronic apparatus 510 may obtain an LLM prompt based on the extracted dialogue information, device control history information, and the like. Here, the extracted dialogue information may correspond to information about similar dialogue history (similar history information) obtained based on an uttered (dialoguing) voice of a user.

Here, the LLM prompt may correspond to an instruction/text for inputting into the LLM 517. Because the detailed description of the LLM prompt has been described above, redundant descriptions thereof will be omitted.

Meanwhile, the IoT Hub 520 may include a single dialogue DB 521, an interaction dialogue DB 522, a dialogue by location DB 523, a device control DB 524, a user response DB 525, a DB update module 526, and a LLM 527.

Here, the single dialogue DB 521, the interaction dialogue DB 522, the dialogue by location DB 523, the device control DB 524, the user response DB 525, and the DB update module 526 may respectively perform the same function as with the single dialogue DB 511, the interaction dialogue DB 512, the dialogue by location DB 513, the device control DB 514, the user response DB 515, and the DB update module 516 included in the electronic apparatus 510.

Meanwhile, the single dialogue DB 521, the interaction dialogue DB 522, the dialogue by location DB 523, the device control DB 524, and the user response DB 525 herein may store the voice records or device control history collected by the electronic apparatus 510. For example, the IoT Hub 520 may receive the voice records or device control history collected by the electronic apparatus 510, and store in a corresponding DB.

The LLM 527 stored in the IoT Hub 520 may correspond to the external LLM. Here, the LLM 527 may correspond to a model trained to output content that includes the dialogue sentences based on the history information like the LLM 517 stored in the electronic apparatus 510. However, the LLM 527 stored in the IoT Hub 520 may correspond to a model trained according to the data collected from other devices other than the electronic apparatus 510.

Meanwhile, the electronic apparatus 510 may generate dialogue sentences using the internal LLM, but is not necessarily limited thereto, and may generate dialogue sentences using the external LLM according to circumstance.

For example, the electronic apparatus 510 may identify, based on detecting dialoguing voices of users A and B, whether a DB corresponding to the dialogues of users A and B is stored in the electronic apparatus 510. If the DB corresponding to the dialogues of users A and B is not stored therein, a signal requesting for the dialogue sentences corresponding to the dialogues of users A and B may be provided to the IoT Hub 520.

If a DB corresponding to the dialogues of users A and B are stored in the IoT Hub 520, the IoT Hub 520 may obtain a prompt based on a relevant DB and generate a dialogue sentence corresponding to the user voices of users A and B using the LLM 527. The IoT Hub 520 may provide the generated dialogue sentence to the electronic apparatus 510.

Here, the history information corresponding to the dialogues of users A and B stored in the IoT Hub 520 may correspond to information collected by another external device that is different from the electronic apparatus 510. For example, the external device may sense a different space from the electronic apparatus 100, and collect voice records of previous dialogue voices of users A and B. The external device may provide the collected voice records to the IoT Hub 520.

As described, the electronic apparatus 510 may use a DB stored in at least one of the electronic apparatus 510 and the IoT Hub 520, and generate a dialogue sentence through the LLM stored in the electronic apparatus 510 or the IoT Hub 520. Through the above, the electronic apparatus 510 may generate, by using data stored in at least one of the electronic apparatus 510 or the IoT Hub 520 according to necessity, a dialogue sentence more suitable to the user voice.

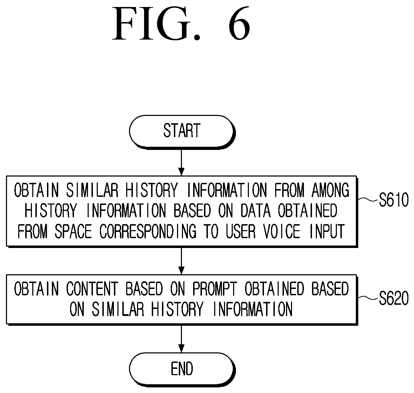

FIG. 6 is a flowchart illustrating a controlling method of an electronic apparatus according to one or more embodiments of the disclosure.

The electronic apparatus 100 may obtain similar history information from among the history information based on data obtained from the space where the user voice input is received (S610).

According to one or more embodiments, similar history information corresponding to the user voice input from among the history information may be obtained based on the data obtained from the space corresponding to the user voice input.

Then, the electronic apparatus 100 may obtain content based on a prompt obtained based on the similar history information (S620).

According to one or more embodiments, the electronic apparatus 100 may obtain content corresponding to the user voice input through an artificial intelligence model using the prompt that has been obtained based on the similar history information. Here, the artificial intelligence model may correspond to a model trained to output content corresponding to a previous user voice input based on the previous user voice input and the history information.

As described, the electronic apparatus 100 may sense the space in which the user voice is generated/uttered, and obtain content corresponding to the user voice input based on the sensing data. Through the above, the electronic apparatus 100 may use the artificial intelligence model trained to generate dialogue sentences and the like for the user, but use similar histories associated with a current utterance from a DB that has been grouped to obtain a suitable prompt. The electronic apparatus 100 may provide a dialogue-type content more suitable to the current utterance or situation of the user according to the obtained prompt.

At this time, the electronic apparatus 100 may obtain content using a database including voice records and device control history. An operation associated therewith will be described in detail below.

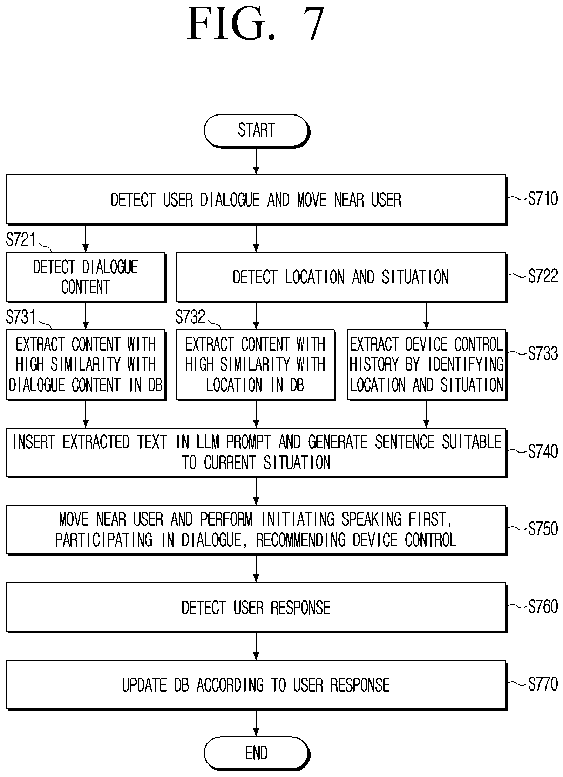

FIG. 7 is a diagram illustrating a database according to one or more embodiments of the disclosure.

The electronic apparatus 100 may detect user dialogue and move near the user (S710). Then, the electronic apparatus 100 may detect dialogue content (S721), and detect a location and situation (S722).

For example, the electronic apparatus 100 may move near a position identified as where a user voice has generated, and detect the user voice. The electronic apparatus 100 may detect the dialogue content, the location, and the situation associated with the user voice.

Here, the electronic apparatus 100 may obtain at least one from among voice data and image data near the position where the user voice is generated. The electronic apparatus 100 may obtain at least one from among information about the dialogue content, the location, and the situation based on at least one from among the voice data and the image data.

Here, the dialogue content may correspond to content obtained by converting the user voice to text from the voice data. Here, because the respective information about the location and situation has been described above, redundant descriptions thereof will be omitted.

Then, the electronic apparatus 100 may extract content with a high similarity with the dialogue content from the DB based on the detected dialogue content (S731).

Here, the DB may correspond to the above-described single dialogue DB or interaction dialogue DB.

For example, the electronic apparatus 100 may identify one from among a plurality of single dialogue DBs distinguished by individual voice IDs, according to the voice IDs based on a current dialogue content. Alternatively, the electronic apparatus 100 may identify one from among a plurality of DBs (e.g., DB between family members) distinguished by voice ID of a plurality of speakers according to the voice IDs based on the dialogue content.

Here, the content with a high similarity may mean content similar with a current dialogue content (voice records, etc.) in the identified DB. Here, the similar content may mean voice records and the like showing a high similarity with a topic, a word, or context of a current dialogue content.

Meanwhile, the electronic apparatus 100 may extract, based on the detected location and situation, content with a high similarity with the location in the DB (S732).

Here, the DB may correspond to the dialogue by location DB. For example, the electronic apparatus 100 may identify one from among a plurality of DBs distinguished according to a plurality of locations based on the detected current dialogue location. The electronic apparatus 100 may extract content with a high similarity with the current location from the identified DB.

Here, the content with a high similarity may mean voice records and the like from locations having similar characteristics with characteristics of the current location in the DB. Here, the characteristics may mean physical/visual and acoustic characteristics (e.g., a structure of a space, voices in the surrounding, etc.) of a specific location. Here, the physical/visual and acoustic characteristics may be identified based on the voice data, the image data, and the like.

Meanwhile, the electronic apparatus 100 may extract the device control history by identifying the location and situation, and identifying the location and situation in the DB (S733).

Here, the DB may correspond to the device control DB. For example, the electronic apparatus 100 may identify one from among a plurality of device control DBs distinguished according to the user, the location, the situation, and the like based on the identified location and situation. The electronic apparatus 100 may extract history information (e.g., history of having controlled a specific device) included in the device control DB corresponding to the identified location and situation.

Then, the electronic apparatus 100 may insert the extracted text (and/or text based on the extracted information) into the LLM prompt, and generate a sentence suitable to the current situation (S740).

Here, the extracted text may mean an extracted content or a text about the device control history. Here, the extracted content may correspond to content extracted from the identified single dialogue DB (or interaction dialogue DB) and the dialogue by location DB as described above.

Here, the inserting the extracted text in the LLM prompt may mean obtaining a prompt that includes the extracted text. Here, because a detailed description of the prompt has been described above, redundant descriptions thereof will be omitted.

Here, the generating a sentence suitable to the current situation may mean the electronic apparatus 100 generating a dialogue-type sentence corresponding to a current dialogue by inputting the LLM prompt into the LLM. However, the embodiment is not limited thereto.

Then, the electronic apparatus 100 may move near the user, and perform initiating speaking first, participating in dialogue, or recommending device control (S750).

If the electronic apparatus 100 is already positioned near the user, the initiating speaking first, and the like may be performed from the corresponding position.

Here, the initiating speaking first may mean outputting a voice message or question to proactively start the dialogue. For example, if no particular utterances are generated after the initially detected utterance (dialogue) of users, the electronic apparatus 100 may output a voice message or question to the user according to a topic of the previous utterance or the dialogue content.

Here, the participating in dialogue may mean participating in a dialogue flow while providing a suitable response by responding to an utterance of the user or understanding the dialogue context. For example, the electronic apparatus 100 may output, near a user who continues to make utterances, a reply or a question to utterance of the user.

Here, the recommending device control may mean recommending a device control corresponding to the current utterance from device control history extracted from the device control DB.

For example, if there is history of a specific user 'setting the air conditioner to 24 degrees' from a corresponding uttered location, the LLM may generate a sentence suggesting to output the air conditioner at 24 degrees based on the LLM prompt including the above-described information. For example, the electronic apparatus 100 may output, to the user, a sentence such as 'would you like to set the living room temperature to 24 degrees?'.

Then, the electronic apparatus 100 may detect a response of the user (S760). Here, the response of the user may correspond to one of an affirmative response or a negative response. Then, the electronic apparatus 100 may update the DB according to the detected user response (S770). Here, the DB may correspond to the identified single dialogue DB (or interaction dialogue DB), the dialogue by location DB, the device control DB, or the like.

For example, the electronic apparatus 100 may store the detected user response in the user response DB, and store the user response in the above-described single dialogue DB, the dialogue by location DB, and the like as history information. The stored history information may be obtained as similar history information corresponding to a new user voice thereafter.

As described, the electronic apparatus 100 may obtain, using a plurality of DBs distinguished by category (speaker, location, device control, etc.), an LLM prompt for generating dialogue sentences. Then, the electronic apparatus 100 may update the existing DBs using the responses of users with respect to the dialogue sentences.

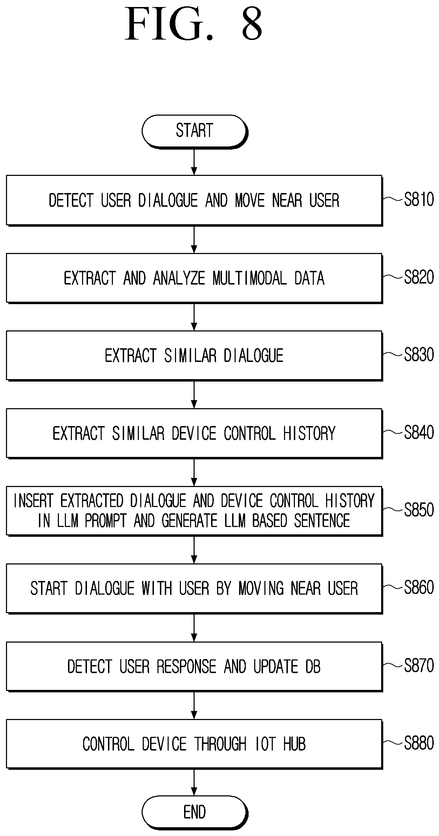

FIG. 8 is a diagram illustrating a device control history according to one or more embodiments of the disclosure.

The electronic apparatus 100 may detect a user dialogue and move near the user (S810). Then, the electronic apparatus 100 may extract multimodal data and analyze the same (S820).

Here, the multimodal data may mean information that combined data of various types collected from a dialogue with a user. For example, the multimodal data may include voice data extracted from a user voice, image data detected with a camera (image sensor), and situation information such as the current time.

The electronic apparatus 100 may identify at least one DB corresponding to the multimodal data obtained from dialoguing voices of users. Here, the DB may correspond to at least one from among the plurality of DBs distinguished according to the above-described plurality of categories.

Then, the electronic apparatus 100 may extract a similar dialogue (S830). For example, the electronic apparatus 100 may extract history information similar with a current dialogue content, location, or situation from among the history information stored in the identified DB. Because the above has been described in detail above, redundant descriptions thereof will be omitted.

Then, the electronic apparatus 100 may extract a similar device control history (S840). Specifically, the electronic apparatus 100 may extract the similar device control history from the device control DB. Here, the device control DB may correspond to a device control DB identified based on the above-described multimodal data.

Here, the electronic apparatus 100 may extract the device control history corresponding to the extracted similar dialogue. For example, the electronic apparatus 100 may analyze the multimodal data extracted from the dialogue of users A and B, and obtain information that 'the current speakers are A and B, the dialogue location is the living room, and the current time period is a dinner time period'.

The electronic apparatus 100 may identify at least one DB corresponding to 'A and B' which are the current speakers, 'living room' which is the current location, and 'dinner time' period which is the current time period from among the plurality of DBs. The electronic apparatus 100 may extract the similar dialogue from the extracted DB.

Then, the electronic apparatus 100 may identify, from among the plurality of device control DBs, whether a DB corresponding to the extracted similar dialogue is stored. In other words, the electronic apparatus 100 may identify whether a device control DB corresponding to a previous similar dialogue history in which the speakers are 'A and B', the location is the 'living room', and carried out at 'dinner time' period is stored.

If the device control DB corresponding to the previous similar dialogue history is stored, a similar device control history may be extracted from the corresponding DB. For example, the electronic apparatus 100 may extract a history of 'setting air conditioner to 24 degrees' from among dialogues of 'speakers being A and B', the location being the 'living room', and the dialogue being carried out at 'dinner time' period.

Then, the electronic apparatus 100 may insert the extracted text in the LLM prompt, and generate a sentence suitable to the current situation (S850). Then, the electronic apparatus 100 may move near the user, and start a dialogue with the user (S860). For example, the electronic apparatus 100 may move near the user, and perform initiating speaking first, participating in dialogue, or recommending device control.

Then, the electronic apparatus 100 may detect a response of the user, and update the DB (S870). Here, because the operation of detecting the user response, the updated DB, and the like have been described above, redundant descriptions thereof will be omitted.

Then, the electronic apparatus 100 may perform control of a device through the IoT Hub (S880). Specifically, the electronic apparatus 100 may perform control of a device based on the detected response of the user.

For example, if the electronic apparatus 100 outputs a sentence of 'would you like the living room temperature set to 24 degrees?' to the user, the electronic apparatus 100 may receive an affirmative or negative response such as 'yes' or 'no' from the user.

If the electronic apparatus 100 receives an affirmative response from the user, the electronic apparatus 100 may transmit a control signal for setting the air conditioner temperature to 24 degrees to the IoT Hub. The IoT Hub may transmit, based on the corresponding control signal, a control signal for setting the air conditioners to 24 degrees to the air conditioners in the home communicable with the IoT Hub.

Accordingly, the electronic apparatus 100 may not only extract similar dialogue history from the current dialoguing voice of the user, but also extract the device control history associated with the extracted similar dialogue history. Through the above, the electronic apparatus 100 may not only provide to the user a dialogue sentence suitable to the context and the like of the current dialogue, but also recommend to the user a device control similar with the device control performed from a previous similar environment (speaker, location, etc.).

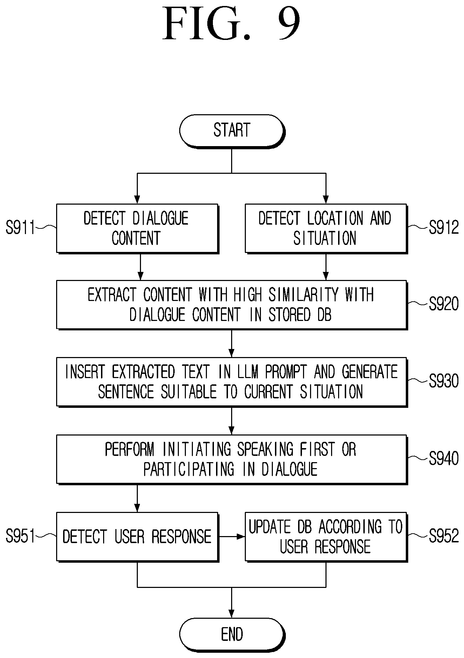

FIG. 9 is a diagram illustrating a user response according to one or more embodiments of the disclosure.

The electronic apparatus 100 may detect a dialogue content (S911), and detect a location and situation (S912). Here, the electronic apparatus 100 may detect a user dialogue, may move to an identified location where the dialogue voice is generated, and detect the dialogue content, location and situation.

Then, the electronic apparatus 100 may extract a content with high similarity with the dialogue content in the stored DB (S920). Here, the content with high similarity with the dialogue content may mean voice records similar in content with the current dialogue voice from among the voice records included in the DB.

Then, the electronic apparatus 100 may insert the extracted text in the LLM prompt and generate a sentence suitable to the current situation (S930) by inputting the LLM prompt into the LLM. Then, the electronic apparatus 100 may perform the initiating speaking first or the participating in dialogue (S940).

Then, the electronic apparatus 100 may detect the user response (S951), and update the DB suitable to the user response (S952). Here, the user response may mean a response by the user with respect to the dialogue sentence. Here, the dialogue sentence may correspond to a sentence obtained through the LLM based on a previous dialogue history similar with the current dialogue.

As described, the electronic apparatus 100 may extract a dialogue history similar with the current dialogue content, location, and the like, and generate and provide a dialogue sentence to the user based on the extracted dialogue history.

For example, the electronic apparatus 100 may identify that the speakers are B and B, and that the dialogue topic is 'food to eat for dinner' from a dialogue of the user. Here, the electronic apparatus 100 may extract keywords such as 'dinner', 'cook', 'delivery', 'pizza', and the like from the voice data obtained from the dialogue voice, and identify the dialogue topic from the extracted keywords.

The electronic apparatus 100 may extract, based on the identified dialogue information (information about the speaker and dialogue topic), a similar dialogue history from a pre-stored DB. The electronic apparatus 100 may identify information of 'having eaten pizza twice in the last week' as the similar dialogue history. The information may correspond to information extracted from voice records of speakers B and C.

The electronic apparatus 100 may obtain a prompt including information of 'having eaten pizza twice in the last week' from the similar dialogue history as described above. The electronic apparatus 100 may generate a dialogue sentence such as 'You have recently eaten pizza several times. How about kimchi stew for dinner tonight?' through the LLM based on the obtained prompt and output the same to the user.

The electronic apparatus 100 may detect the user response (yes or no) with respect to the output dialogue sentence. The electronic apparatus 100 may record and update information about the user response (affirmative response or negative response) in the DB.

Meanwhile, in FIG. 8, the electronic apparatus 100 has been described with an example of the operation for detecting the user response with respect to the recommended device control and updating the DB, but the embodiment is not necessarily limited thereto. In other words, as described above, the electronic apparatus 100 may output, based on a specific speaker and a previous dialogue history about the topic, in addition to the history associated with device control, the dialogue sentence to the user, and update the DB by detecting the user response.

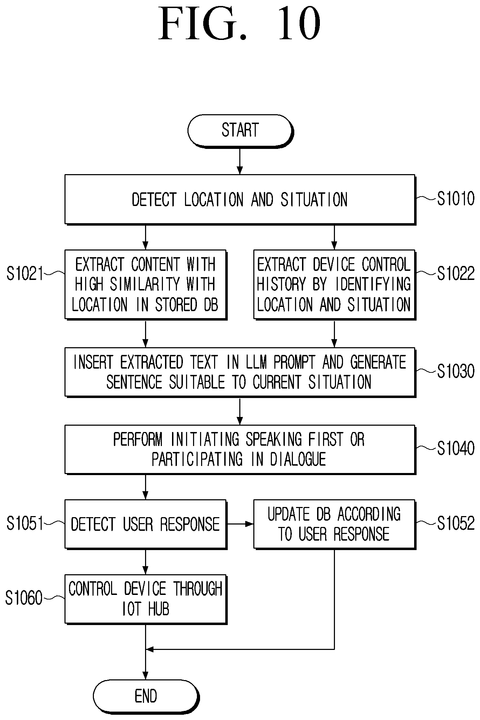

FIG. 10 is a diagram illustrating a device control operation according to one or more embodiments of the disclosure.

The electronic apparatus 100 may detect a location and situation (S1010). For example, the electronic apparatus 100 may obtain voice data and image data from a dialoguing voice of the user, and detect the location and situation associated with the dialogue of the user based on the voice data and the image data.

Then, the electronic apparatus 100 may extract content with high similarity with the location in the stored DB (S1021), and extract the device control history by identifying the location and situation (S1022). Then, the electronic apparatus 100 may insert the extracted text in the LLM prompt, and generate a sentence suitable to the current situation (S1030).

For example, the electronic apparatus 100 may obtain, based on the voice data and image data obtained from the dialoguing voice of the user, information that the dialogue location is the 'living room', and that 'user B is sitting on the sofa in the living room'.

The electronic apparatus 100 may extract history recorded from the corresponding location (living room) from the stored DB (e.g., DB by location, DB by situation, device control DB, etc.). Specifically, the electronic apparatus 100 may extract, based on there being several cases of history of lowering the lights at 7:00 P.M. in the living room and having viewed the TV while sitting on the sofa, the corresponding history as similar history.

In other words, the electronic apparatus 100 may extract 'history of having performed viewing the TV, or dialoguing of a specific content while sitting on the sofa in the living room' as content with high similarity with the current dialogue location (living room). In addition, the electronic apparatus 100 may extract 'history of having lowered the lighting at 7:00 P.M. in the living room' as the device control history.

The electronic apparatus 100 may obtain, based on the extracted history, a LLM prompt including information of 'lowering the lighting in the living room at 7:00 P.M. and viewing TV'. The electronic apparatus 100 may generate, based on the obtained prompt, a dialogue sentence such as 'Would you like the lighting lowered to relax comfortably in the living room? Please let me know if you wish to watch TV.' through the LLM.

Then, the electronic apparatus 100 may perform the initiating speaking first, the participating in dialogue, or the like (S1040). For example, the electronic apparatus 100 may output a generated sentence to the user in the vicinity of the user. In other words, the electronic apparatus 100 may project the generated sentence as an image through the projection part or output as a voice through the speaker for the user to recognize the generated sentence through sight or hearing.

Then, the electronic apparatus 100 may update the DB according to the user response (S1052), and perform control of device through the IoT Hub (S1060).

For example, if the electronic apparatus 100 receives an affirmative response by the user, the electronic apparatus 100 may transmit a control signal (e.g., control signal for lowering brightness) for controlling an external device (indoor lighting device) to the IoT Hub.

Then, the electronic apparatus 100 may update the DB by storing the user response history in the DB. In addition, the electronic apparatus 100 may output to the user a new sentence of 'lighting has been lowered'.

As described, the electronic apparatus 100 may detect only the current location and situation of the user, and provide a dialogue sentence suitable to the user by extracting a similar history associated with the detected location and situation. Furthermore, the electronic apparatus 100 may generate, based on there being history of having controlled a device in the current location and situation (repeatedly recorded history), a sentence for recommending control of the device to the user and provide the same to the user.

Meanwhile, although the order of all steps have been mapped for convenience of description in FIG. 6 to FIG. 10, the steps are not necessarily limited by the corresponding order such as steps which are not relevant to the order or steps that are performable in parallel.

Meanwhile, methods according to at least a portion from among the various embodiments of the disclosure described above may be implemented in an application form installable in an electronic apparatus of the related art.

In addition, the methods according to at least a portion from among the various embodiments of the disclosure described above may be implemented with only a software upgrade, or a hardware upgrade of the electronic apparatus of the related art.

In addition, the methods according to at least a portion from among the various embodiments of the disclosure described above may be performed through an embedded server provided in the electronic apparatus, or at least one external server of the electronic apparatus.

Meanwhile, according to an embodiment of the disclosure, the various embodiments described above may be implemented with software including instructions stored in a machine-readable storage media (e.g., computer). The machine may call the stored instruction from a storage medium, and as an apparatus operable according to the called instructions, may include an electronic apparatus (e.g., electronic apparatus (A)) according to the above-mentioned embodiments. Based on a command being executed by the processor, the processor may directly or using other elements under the control of the processor perform a function corresponding to the command. The command may include a code generated by a compiler or executed by an interpreter. A machine-readable storage medium may be provided in a form of a non-transitory storage medium. Herein, the 'non-transitory storage medium' merely means that the storage medium is tangible and does not include a signal (e.g., electromagnetic waves), and the term does not differentiate data being semi-permanently stored or being temporarily stored in the storage medium. As an example, the 'non-transitory storage medium' may include a buffer in which data is temporarily stored. According to an embodiment, a method according to the various embodiments described in the disclosure may be provided included a computer program product. The computer program product may be exchanged between a seller and a purchaser as a commodity. The computer program product may be distributed in a form of the machine-readable storage medium (e.g., a compact disc read only memory (CD-ROM)), or distributed online (e.g., downloaded or uploaded) through an application store (e.g., PLAYSTORE^{™}) or directly between two user devices (e.g., smartphones). In the case of online distribution, at least a portion of the computer program product (e.g., downloadable app) may be stored at least temporarily in the machine-readable storage medium such as a server of a manufacturer, a server of an application store, or a memory of a relay server, or temporarily generated.

The various embodiments of the disclosure may be implemented with software including instructions stored in the machine-readable storage media (e.g., computer). The machine may call the stored instructions from the storage medium, and as an apparatus operable according to the called instructions, may include the electronic apparatus (e.g., electronic apparatus 100) according to the above-mentioned embodiments.

When the above-described command is executed by the processor, the processor may directly or using other elements under the control of the processor perform a function corresponding to the command. The command may include a code generated by a compiler or executed by an interpreter.

## Claims

1. An electronic apparatus (100), comprising:
memory (110) storing instructions;
at least one sensor (120) for sensing a space; and
at least one processor (130) comprising processing circuitry,
wherein the instructions, when executed individually or collectively by the at least one processor, cause the electronic apparatus to:
obtain, based on data obtained from a space where a user voice input is received through the at least one sensor, similar history information corresponding to the user voice input from among history information, and
obtain content corresponding to the user voice input by inputting a prompt obtained based on the similar history information into an artificial intelligence model,
wherein the artificial intelligence model is an artificial intelligence model based on previous user voice input and the history information.

2. The electronic apparatus of claim 1, wherein the instructions, when executed individually or collectively by the at least one processor (130), cause the electronic apparatus to:
identify, based on the obtained data, at least one group corresponding to the user voice input from among a plurality of groups in the history information, and
obtain information belonging to the at least one group as the similar history information,
wherein each of the plurality of groups contains information relating to a history of one or more specific speakers having used the electronic apparatus at one or more specific locations.

3. The electronic apparatus of claim 2, wherein the sensors (120) comprise:
a microphone (121);
and an image sensor (122), and
wherein the instructions, when executed individually or collectively by the at least one processor (130), cause the electronic apparatus to:
identify the at least one group based on voice data corresponding to the user voice input obtained through the microphone matching the one or more specific speakers, and/or image data of the space obtained through the image sensor matching the one or more specific locations.

4. The electronic apparatus of claim 3, wherein each of the plurality of groups comprises at least one voice record from among the one or more specific speakers, and
wherein the instructions, when executed individually or collectively by the at least one processor (130), cause the electronic apparatus to:
identify at least one group comprising voice records corresponding to the voice data from among the plurality of groups.

5. The electronic apparatus of claim 4, wherein the plurality of groups comprises:
at least one dialogue group comprising voice records of a plurality of dialogue participants from among the specific speakers, and
wherein the instructions, when executed individually or collectively by the at least one processor (130), cause the electronic apparatus to:
identify, based on a plurality of users (410-1, 410-2, 410-3) being identified as positioned in the space based on at least one from among the voice data and the image data, the at least one group comprising voice records corresponding to the voice data from among the at least one dialogue group.

6. The electronic apparatus of claim 3, wherein the instructions, when executed individually or collectively by the at least one processor (130), cause the electronic apparatus to:
identify a location corresponding to the space based on the image data of the space, and
identify the at least one group corresponding to the identified location from among the plurality of groups.

7. The electronic apparatus of claim 6, wherein the at least one group further comprises records corresponding to control of at least one external device (520) from the identified location.

8. The electronic apparatus of claim 2, wherein the instructions, when executed individually or collectively by the at least one processor (130), cause the electronic apparatus to:
obtain a portion of information corresponding to a current time from among information belonging to the at least one group as the similar history information.

9. The electronic apparatus of claim 1, wherein the instructions, when executed individually or collectively by the at least one processor (130), cause the electronic apparatus to:
obtain the prompt based on a text converted from the user voice input and the similar history information.

10. The electronic apparatus of claim 1, further comprising:
a moving part (150) configured to move the electronic apparatus (100), and
wherein the instructions, when executed individually or collectively by the at least one processor (130), cause the electronic apparatus to:
obtain a voice input position corresponding to a position where a user voice corresponding to the user voice input is identified as having been uttered, and
control the moving part (150) to move the electronic apparatus (100) to a position that is a pre-set distance from the voice input position.

11. A controlling method of an electronic apparatus, the method comprising:
obtaining (S610), based on data obtained from a space where a user voice input is received, similar history information corresponding to the user voice input from among history information; and
obtaining (S620) content corresponding to the user voice input by inputting a prompt obtained based on the similar history information into an artificial intelligence model,
wherein the artificial intelligence model is an artificial intelligence model based on previous user voice input and the history information.

12. The method of claim 11, wherein the obtaining (S610) similar history information comprises:
identifying, based on the obtained data, at least one group corresponding to the user voice input from among a plurality of groups in the history information; and
obtaining information belonging to the at least one group as the similar history information,
wherein each of the plurality of groups contains information relating to a history of one or more specific speakers having used the electronic apparatus at one or more specific locations.

13. The method of claim 12, wherein the identifying at least one group comprises:
identifying the at least one group based on voice data corresponding to the user voice input matching the one or more specific speakers, and/or image data of the space matching the one or more specific locations.

14. The method of claim 13, wherein each of the plurality of groups comprises at least one voice record from among the one or more specific speakers, and
the identifying at least one group corresponding to the user voice input from among the plurality of identified groups based on at least one from among a plurality of speakers and a plurality of locations comprises:
identifying at least one group comprising voice records corresponding to the voice data from among the plurality of groups.

15. A computer-readable medium comprising instructions which, when executed by a processor of an electronic apparatus, cause the electronic apparatus to:
obtain, based on data obtained from a space where a user voice input is received, similar history information corresponding to the user voice input from among history information; and
obtain content corresponding to a user voice input by inputting a prompt obtained based on the similar history information into an artificial intelligence model,
wherein the artificial intelligence model is an artificial intelligence model trained to generated sentences based on previous user voice input and the history information.
